# EUROPEAN PATENT APPLICATION

(11) **EP 3 026 401 A2**
(43) Date of publication of application: **01.06.2016**
(21) Application number: 15194043.4
(22) Date of filing: 11.11.2015
(51) Int. Cl.: G01F 1/075, F15D 1/00, G01F 15/14, G01F 15/18

(54) **FLOW SENSOR**

(30) Priority: 26.11.2014 JP 2014239069
(71) Applicant: Kabushiki Kaisha Saginomiya Seisakusho, Tokyo 165-8907 (JP)
(72) Inventor: KODAMA, Satoshi, Saitama, 359-1105 (JP)
(74) Representative: Hoffmann Eitle

(57) **Abstract**

A flow sensor for measuring the flowing quantity of a fluid, in which the flow sensor main body and the flow rate detection portion for performing the flow measurement is easily detachable, comprising:
a flow sensor main body 12 in which the fluid is flowed and which is provided with a flow measurement rotating blade member 32 that is rotated by fluid flow, and
a flow rate detection portion 54 in which flow measurement is performed by rotating of the flow measurement rotating blade member 32,
wherein on a peripheral side of the flow sensor main body 12, a flexible engaging portion 62 and an engaging space portion 72 formed by the engaging portion 62 are formed,
and wherein in the engaging space portion 72 of the flow sensor main body 12, the flow rate detection portion 54 is provided to elastically deform the flexible engaging portion 62,
and whereby by the restoring force of the flexible engaging portion 62, the flow rate detection portion 54 is detachably engaged with the peripheral side of the flow sensor main body 12.

## Description

### [Technical Field]

The invention relates to a flow sensor to measure the flowing quantity of the fluid which is flowed in piping. For instance, the invention relates to the flow sensor to measure the flowing quantity of the fluid of the liquid such as an instantaneous hot-water heater, a boiler, facilities of supplying hot water, and electric water heaters.

### [Background Art]

Conventionally, as for a flow sensor to measure the flowing quantity of such a fluid, a flow sensor of the type that generates the pulse signal corresponding to the detection flowing quantity is developed.

For instance, besides this flow sensor is used for such as the feedforward control of the instantaneous water heater and the ignition control of the burner, it is widely used as the sensor for the detection of the integrated flow rate to the bathtub and the remaining hot water amounts of the boilers.

As for a flow sensor to measure the flowing quantity of such a fluid, there is a flow sensor having structure disclosed in Patent Document 1 (JP, 2001-255183, A).

Fig. 18 is a longitudinal sectional view of the conventional flow sensor disclosed in this Patent Document 1.
Fig. 19 is an end view in the direction of A of the flow sensor of Fig. 18.

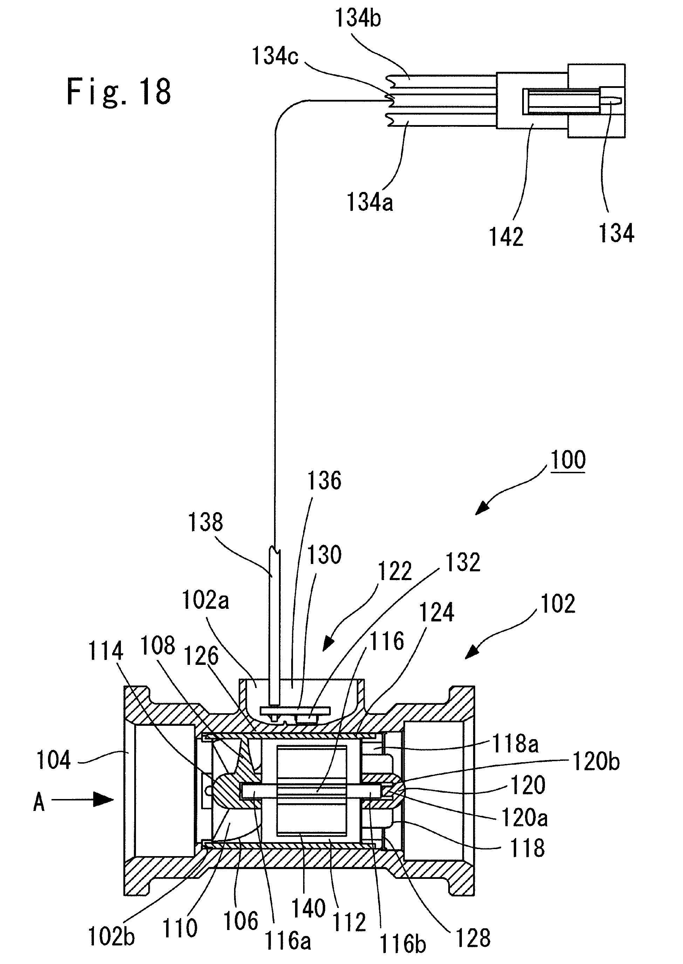

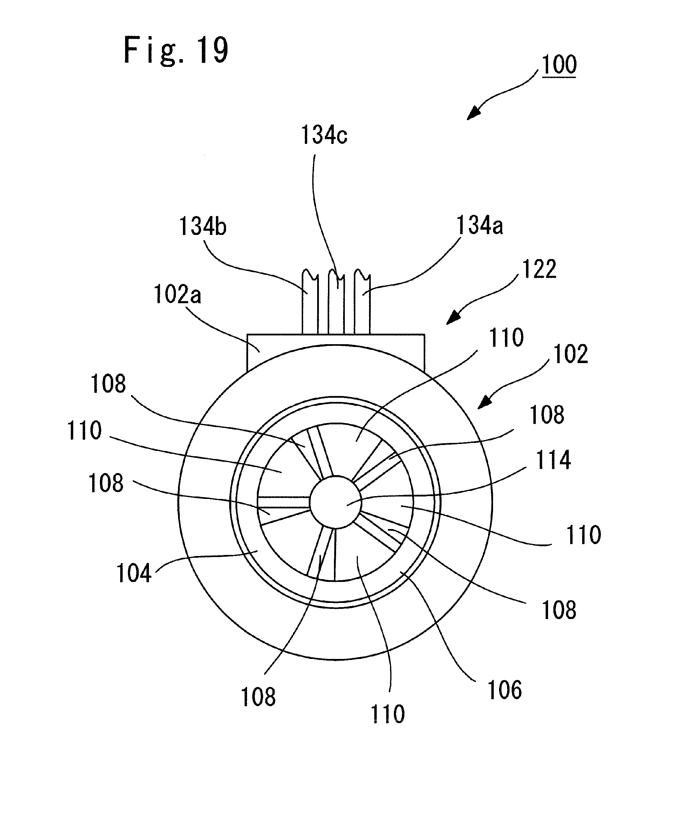

This conventional flow sensor 100, as shown in Fig. 18 and Fig. 19, includes a flow sensor main body 102 which composes the main body of the flow sensor piping of the substantially circular tube shape.
In an entrance 104 on the upstream side of this flow sensor main body 102, a fixed vortex flow generating blade member 106 which generates the vortex flow is provided.

Moreover, as shown in Fig. 18 and Fig. 19, the vortex flow generating blade member 106 includes a plurality of blade members 108 (5 blade members) formed like the spiral. Moreover, between a plurality of the blade members 108 formed like this, five vortex flow generating introducing path 110 are formed like the spiral.

Moreover, on the downstream of the vortex flow generating blade member 106, a flow measurement rotating blade member 112, which is rotated by the vortex flow generated by passing through the vortex flow generating introducing path 110 of the vortex flow generating blade member 106,is rotatably provided.

That is, a bearing 114 is formed on the center of the vortex flow generating blade member 106.
In addition, one edge 116a of a shaft portion 116 of the flow measurement rotating blade member 112 is provided to this bearing 114.

In addition, on the downstream of this flow measurement rotating blade member 112, an outlet member 118, to exhaust the fluid which is passed through this flow measurement rotating blade member 112, is provided.
A plurality of outlets 118a to exhaust the fluid is formed on this outlet member 118.

Moreover, a bearing 120 is formed on the center of this outlet member 118.
In addition, the other edge 116b of the shaft portion 116 of the flow measurement rotating blade member 112 is provided to this bearing 120.

By composing like this, by being pivoted by the bearing 114 of the vortex flow generating blade member 106 and the bearing 120 of the outlet member 118, the flow measurement rotating blade member 112 is rotatably provided.

In addition, as shown in Fig. 18 and Fig. 19, as for the flow measurement rotating blade member 112, four blade portions 140, which is formed and spaced mutually by the central angle degree of 90°, is provided.
The tip of these blade portions 140 is magnetized respectively alternately in S pole and N pole.

Moreover, on a recess 102a which is formed on the side of the flow sensor main body 102, a flowing quantity detection portion 122, in which the flow measurement is performed by the rotating of the flow measurement rotating blade member 112, is provided.

In this flow rate detection portion 122, for instance, by hall IC etc., together with the rotation of the flow measurement rotating blade member 112, by change of flux density by magnetized tip of the blade portion 140, or by outputting the change of the field direction as a pulse signal, flowing quantity is measured.

In addition, the vortex flow generating blade member 106 is integrally formed with a casing 124 of the cylindrical shape.

These flow measurement rotating blade member 112 and outlet member 118 are integrally contained in the casing 124 of the cylindrical shape, whereby a flow sensor unit 126 is formed.

Moreover, this flow sensor unit 126 is abutted its side of the vortex flow generating blade member 106 to the steps portion 102b on the entrance side which is formed on the flow sensor main body 102.
As a result, the flow sensor unit 126 is disposed in the flow sensor main body 102 by fixing the side of the outlet member 118 with a fixing ring 128.

In the conventional flow sensor 100 composed like this, the fluid introduced from the entrance 104 of the upstream side of the flow sensor main body 102 is passed through the vortex flow generating introducing path 110 of the vortex flow generating blade member 106, so that the vortex flow is generated.

Moreover, by the vortex flow generated like this, the flow measurement rotating blade member 112 is rotated. In the flow rate detection portion 122, for instance, by hall IC etc., together with the rotation of the flow measurement rotating blade member 112, by change of flux density by magnetized tip of the blade portion 140, or by outputting the change of the field direction as a pulse signal, flowing quantity is measured.

In addition, the fluid which is passed through this flow measurement rotating blade member 112 is exhausted outside through a plurality of the outlet 118a of the outlet member 118.

Specifically, as for the flow rate detection portion 122, a substrate 130 is provided as shown in Fig. 18, and a hall IC 132 is located on this substrate 130.
Moreover, together with the rotation of the flow measurement rotating blade member 112, the change in the field direction by the magnetized tip of the blade portion 140 is detected by the hall IC 132.

That is, direct current normal rated voltage is applied to the hall IC 132 through a terminal 134.
As a result, the voltage of the frequency corresponding to the rotation number (flow rate) of the flow measurement rotating blade member 112 is output through the terminal 134.

In addition, in Fig. 18, the reference numeral 136 shows the sealing resin in which the substrate 130 of the flow rate detection portion 122 and the hall IC 132 etc. are sealed, and the reference numeral 138 shows a lead wire and the reference numeral 142 shows a housing respectively.

Moreover, as shown in Fig. 18, the terminal 134 is connected with three electric wires of a common line (GND) 134a and an input power source line (Vcc) 134b and an output signal line (Vout) 134c.

However, in such conventional flow sensor 100, the flow sensor main body 102 that composes the flow sensor piping main body and the flow rate detection portion 122 for performing the flow measurement have the structure that they are integrated by the sealing resin 136 enclosed in the recess 102a which is formed on the side of the flow sensor main body 102.

Therefore, like this, it is the structure that the flow sensor main body 102 and the flow rate detection portion 122 for performing the flow measurement are integrated. Consequently, where either the flow sensor main body 102 or the flow rate detection portion 122 is broken down, both the flow sensor main body 102 and the flow rate detection portion 122 (the flow sensor 100 itself) should be exchanged, and the cost becomes high.

Moreover, like this, it is the structure that the flow sensor main body 102 and the flow rate detection portion 122 for performing the flow measurement are integrated. Therefore, for instance, the flow sensor main body 102 and the flow rate detection portion 122 are inspected beforehand and the performance is inspected beforehand.
As a result, according to the apparatus used, the flow sensor main body 102 and the flow rate detection portion 122 are combined.
However, by such operation, it is impossible to compose best flow sensor 100 corresponding to the use environment.

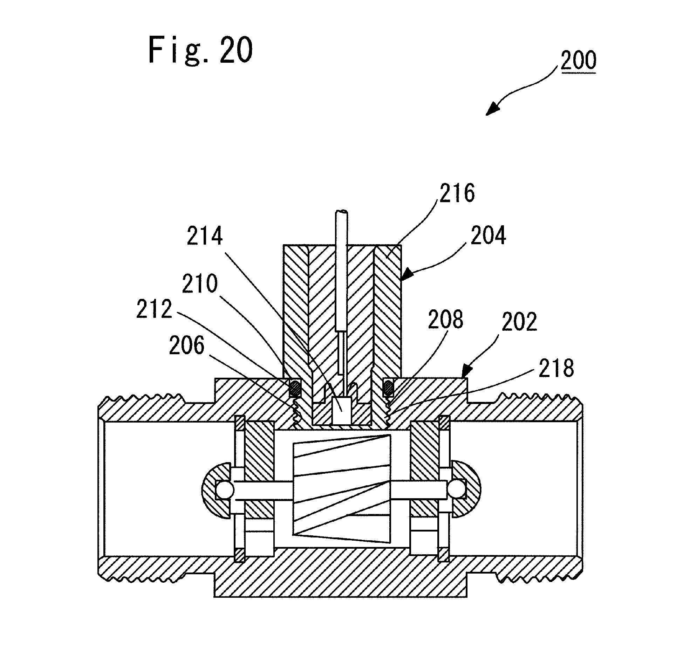

Therefore, as a flow sensor that the flow sensor main body 102 and the flow rate detection portion 122 for performing the flow measurement are separatably composed, a flow sensor 200 having the structure as shown in Fig. 20 is disclosed in Patent Document 2(JP H02(1990)-110824, U).

That is, as shown in Fig. 20, in the flow sensor 200 of Patent Document 2, on the side of a flow sensor main body 202 which composes the flow sensor piping main body, an installation through hole 206 to provide a flow rate detection portion 204 is formed.

Moreover, in the installation through hole 206, a female screw 208 is formed and a sealing groove 210 is formed on the upper part of this female screw 208.
In addition, a sealing member 212 such as O-ring is provided in this sealing groove 210.

On the other hand, flow rate detection portion 204 is provided with a sensor casing 216 in which a sensing element 214 such as halls IC is accommodated.
In addition, on the lower end of this sensor casing 216, a male screw 218, in which the female screw 208 of the installation through hole 206 is screwed, is formed.

As a result, the male screw 218 formed on the lower end of sensor casing 216 is screwed in the female screw 208, which is formed in the installation through hole 206 of flow sensor main body 202.
Consequently, the flow sensor main body 202 and the flow rate detection portion 204 for performing the flow measurement are composed separatably.

Moreover, in Patent Document 3(JP S64 (1989)-51823, U), the flow sensor, in which the flow sensor main body and the flow rate detection portion for performing the flow measurement are separatably composed, is disclosed.

In the flow sensor of this Patent Document 3, though not shown in the drawing, as well as Patent Document 2, on the side of a flow sensor main body, an installation through hole to provide a flow rate detection portion is formed.

In addition, by an installing machine screw, the flow sensor main body and the flow rate detection portion for performing the flow measurement are composed separatably.

### [Prior Art Reference]

[Patent Document 1]
   JP 2001-255183, A
[Patent Document 2]
   JP H02 (1990)-110824, U
[Patent Document 3]
   JP S64 (1989)-51823, U
[Patent Document 4]
   JP S63 (1988)-148828, U

### [Summary of Invention]

### [Problems to be Solved by the Invention]

However, in the flow sensor 200 of Patent Document 2, on the side of a flow sensor main body 202, an installation through hole 206 to provide a flow rate detection portion 204 is formed.
As a result, the pressure of the fluid which flows in the flow sensor main body 202 is exerted to the sensing element 214 such as halls IC of the flow rate detection portion 204.

Therefore, it influences the measurement result, and the measurement result of an accurate flow rate might not be obtained.

According to the pressure of the fluid which flows in the flow sensor main body 202, the sensing element 214 such as halls IC of the flow rate detection portion 204 might be damaged.

Moreover, in the flow sensor of Patent Document 3, the installation through hole is formed, and there is a similar problem.

In addition, in the flow sensor 200 of Patent Document 2, on the side of flow sensor main body 202, the installation through hole 206, the female screw 208, and the sealing groove 210 should be formed.
In addition, the male screw 218 should be formed on the lower end of sensor casing 216, so that it becomes a complicate composition.
As a result, the sealing member 212 such as O-ring is necessary and parts also increase and the cost becomes high.

Moreover, in the flow sensor of Patent Document 3, as well as Patent Document 2, the machine screw hole and the machine screw, etc. should be provided.
As a result, it becomes a complicate composition and the sealing member such as O-ring is necessary and parts also increase and the cost becomes high.

Moreover, in the flow sensor 200 of Patent Document 2, by repeating detaching of the flow sensor main body 202 and the flow rate detection portion 204, screwing between the female screw 208 of the installation through hole 206 and the male screw 218 of the sensor casing 216 is loosened. As a result, the flow rate detection portion 204 might be dropped from the flow sensor main body 202, and the leakage of the fluid might be caused.

In the flow sensor of Patent Document 3 as well as Patent Document 2, by repeating detaching of the flow sensor main body and the flow rate detection portion, the machine screw is wear-out and damaged.
As a result, the flow rate detection portion might be dropped from the flow sensor main body, and the leakage of the fluid might be caused.

Therefore, in Patent Document 4 (JP S63 (1988)-148828, U), as Patent Document 2 and Patent Document 3, the installation through hole is not installed on the side of the flow sensor main body.
In addition, by using the stopper member, the flow sensor, in which the flow sensor main body and the flow rate detection portion for performing the flow measurement are separatably composed, is disclosed.

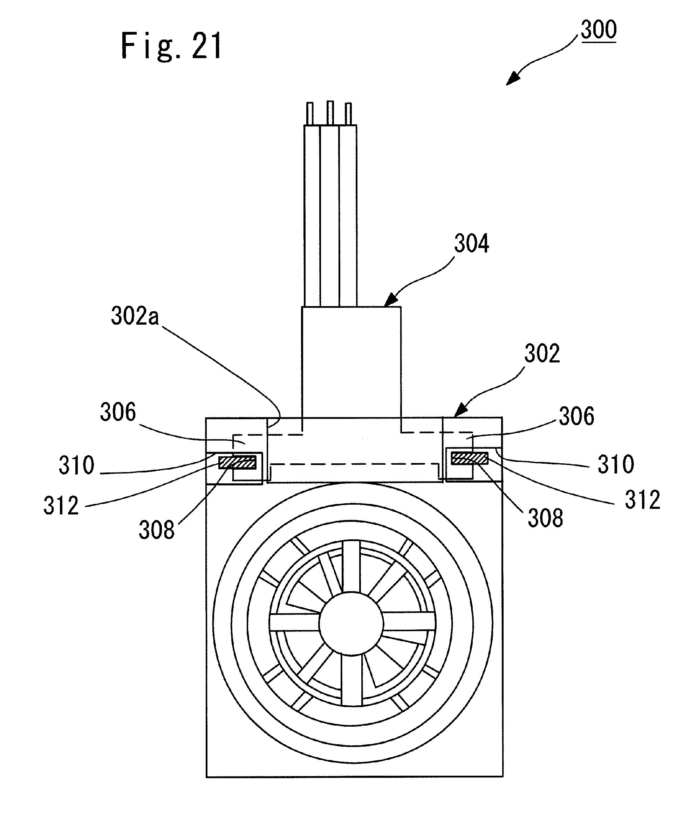

As shown in Fig. 21, in the flow sensor 300 of Patent Document 4, it has the following composition schematically.

That is, as shown in Fig. 21, in the flow sensor 300 of Patent Document 4, in a recess 302a that forms to the upper part of a flow sensor main body 302 which composes the flow sensor piping main body, a flow rate detection portion 304 is fitted.

Under such a condition, a slit 308 that formed outside of a leg 306 of the flow rate detection portion 304, and a groove 310 of which outside is opened on the side of the flow sensor main body 302, are entered into the identifying state.

Moreover, from the longitudinal direction of the flow sensor main body 302, a tabular stopper member 312 is fitted in a slit 308 which is formed on the leg 306 of the flow rate detection portion 304.
As a result, both ends of the longitudinal direction of the stopper member 312 are engaged with the upper wall of the groove 310 of the flow sensor main body 302.
Consequently, the flow sensor main body 302 and the flow rate detection portion 304 for performing the flow measurement are separatably composed.

However, in the flow sensor 300 of Patent Document 4, the slit 308 of the leg 306 of the flow rate detection portion 304 and the groove 310 on the side of the flow sensor main body 302 are formed.
Furthermore, the stopper member 312 should be used.

Therefore, it has a complicate composition and its parts are also increased.
In addition, in order to detach the flow sensor main body and the flow rate detection portion, complex work is necessary and high cost is required.

The invention considers such a current state and is to provide a flow sensor, in which the flow sensor main body and the flow rate detection portion for performing the flow measurement is easily detachable.
Moreover, the invention is to provide a flow sensor, in which it has an easy structure and the number of parts can be also little, and the cost can be reduced.

Moreover, the invention is to provide a flow sensor, in which, even if detaching of the flow sensor main body and the flow rate detection portion is repeated, dropout and loosening are not caused, and the leakage of the fluid might not be caused, and an accurate flow rate can be measured.

In addition, the invention is to provide a flow sensor, in which, for instance, only flow sensor main body can be exchanged when the foreign matter is adhered to the flow sensor main body and it is broken down.
Moreover, the invention is to provide a flow sensor, in which, for instance, when the flow rate detection portion is broken down by the short etc. by the overcurrent etc., only flow rate detection portions can be exchanged, and costs of parts for requiring repair can be reduced.

Moreover, the invention is to provide a flow sensor, in which, for instance, the flow sensor main body and the flow rate detection portion can be inspected beforehand and the performance can be inspected beforehand.
In addition, the invention is to provide a flow sensor, in which, as a result, according to the apparatus used, the flow sensor main body and the flow rate detection portion can be combined, so that best flow sensor corresponding to the use environment can be composed.

### [Solution to Problem]

The invention was invented to attain the problem and the purpose in the above-mentioned prior art.
The flow sensor of the invention being a flow sensor to measure the flowing quantity of the fluid comprising:
a flow sensor main body in which the fluid is flowed and which is provided with a flow measurement rotating blade member that is rotated by fluid flow, and
a flow rate detection portion in which flow measurement is performed by rotating of the flow measurement rotating blade member,
wherein on a peripheral side of the flow sensor main body, a flexible engaging portion and an engaging space portion formed by the engaging portion are formed,
and wherein in the engaging space portion of the flow sensor main body, the flow rate detection portion is provided to elastically deform the flexible engaging portion, or the flexible flow rate detection portion, or both of the flexible engaging portion and the flexible flow rate detection portion,
and whereby by the restoring force of the flexible engaging portion, or the flexible flow rate detection portion, or both of the flexible engaging portion and the flexible flow rate detection portion,
the flow rate detection portion is detachably engaged with the peripheral side of the flow sensor main body.

By composing like this, in the engaging space portion formed by the flexible engaging portion which is formed on a peripheral side of the flow sensor main body, the flow rate detection portion is provided to elastically deform the flexible engaging portion, or the flexible flow rate detection portion, or both of the flexible engaging portion and the flexible flow rate detection portion.

As a result, by the restoring force of the flexible engaging portion, or the flexible flow rate detection portion, or both of the flexible engaging portion and the flexible flow rate detection portion,
the flow rate detection portion can be detachably engaged with the peripheral side of the flow sensor main body.

That is, when the flow rate detection portion is provided to the peripheral side of the flow sensor main body, the flexible engaging portion, or the flexible flow rate detection portion, or both of the flexible engaging portion and the flexible flow rate detection portion is elastically deformed.
As a result, the engaging space portion formed by the flexible engaging portion is extended so that it becomes easy to install the flow rate detection portion in the predetermined position in the engaging space portion.

Moreover, after providing the flow rate detection portion to the predetermined position in the engaging space portion, by the restoring force of the flexible engaging portion, or the flexible flow rate detection portion, or both of the flexible engaging portion and the flexible flow rate detection portion, the engaging space portion is narrowed, and the flow rate detection portion is fixed by the predetermined position in the engaging space portion.

Oppositely, when the flow rate detection portion is detached from the peripheral side of the flow sensor main body, by pulling out the flow rate detection portion from the engaging space portion,
the flexible engaging portion, or the flexible flow rate detection portion, or both of the flexible engaging portion and the flexible flow rate detection portion is elastically deformed.
As a result, the engaging space portion is extended so that it becomes easy to detach the flow rate detection portion from the engaging space portion.

Therefore, the flow sensor main body and the flow rate detection portion for performing the flow measurement is easily detachable.
Moreover, it has an easy structure and the number of parts can be also little, and the cost can be reduced.

In addition, even if detaching of the flow sensor main body and the flow rate detection portion is repeated, dropout and loosening are not caused, and the leakage of the fluid might not be caused, and an accurate flow rate can be measured.

Moreover, for instance, only flow sensor main body can be exchanged when the foreign matter is adhered to the flow sensor main body and it is broken down.
Furthermore, for instance, when the flow rate detection portion is broken down by the short etc. by the overcurrent etc., only flow rate detection portion can be exchanged, and costs of parts for requiring repair can be reduced.

In addition, for instance, the flow sensor main body and the flow rate detection portion can be inspected beforehand and the performance can be inspected beforehand.
As a result, according to the apparatus used, the flow sensor main body and the flow rate detection portion can be combined, so that best flow sensor corresponding to the use environment can be composed.

Moreover, the flow sensor of the invention is characterized in that
an engaging between the flexible engaging portion and the flow rate detection portion includes
an engaging between a protrusion or a recess formed on the flexible engaging portion and a recess or a protrusion formed on the flow rate detection portion.

By composing like this, the protrusion or the recess formed on the flexible engaging portion is convexoconcave-engaged with the recess or the protrusion formed on the flow rate detection portion.
As a result, the engaging between the flexible engaging portion and the flow rate detection portion is attained. Consequently, by the flexible engaging portion, the flow rate detection portion can be surely fixed in the engaging space portion.

Moreover, the flow sensor of the invention is characterized in that the engaging between flexible engaging portion and the flow rate detection portion includes
an engaging between a minute convexoconcave formed on the flexible engaging portion and a minute convexoconcave formed on the flow rate detection portion.

By composing like this, the minute convexoconcave formed on the flexible engaging portion is convexoconcave-engaged with the minute convexoconcave formed on the flow rate detection portion.

As a result, the engaging between the flexible engaging portion and the flow rate detection portion is attained.

Consequently, the engaging force between the minute convexoconcaves is increased, and by the flexible engaging portion, the flow rate detection portion can be surely fixed in the engaging space portion.

Moreover, the flow sensor of the invention is characterized in that
the engaging between the peripheral side and the flow rate detection portion of the flow sensor main body includes an engaging between;
a protrusion or a recess that is formed on the peripheral side of the flow sensor main body, which is extended in the direction that the flow rate detection portion is provided in the engaging space portion of the flow sensor main body, and a recess or a protrusion that is provided on the flow rate detection portion, which is extended in the direction that the flow rate detection portion is provided in the engaging space portion of the flow sensor main body.

By composing like this, the protrusion or the recess that is formed on the peripheral side of the flow sensor main body is convexoconcave-engaged with the recess or the protrusion that is formed on the peripheral side of the flow sensor main body.
As a result, the engaging between the flexible engaging portion and the flow rate detection portion is attained. Consequently, the flow rate detection portion can be surely fixed in the engaging space portion.

Moreover, when the flow rate detection portion is provided in the engaging space portion of the flow sensor main body, the protrusion or the recess that is formed on the peripheral side of the flow sensor main body and the recess or the protrusion that is formed on the flow rate detection portion, are guided.
As a result, the installation can be smoothly attained.

Moreover, the flow sensor of the invention is characterized in that
the flow sensor main body comprising:
a flow sensor piping main body, and
a flow sensor unit which is located in the direction of the fluid flow in the flow sensor piping main body,
the flow sensor unit comprising:
   a vortex flow generating blade member which is located on the upstream side entrance of the fluid of the flow sensor unit, and which is fixed and in which vortex flow is generated, a flow measurement rotating blade member, which is located on the downstream of the vortex flow generating blade member, and which is rotated by vortex flow generated by the vortex flow generating blade member, and
   a bearing in which a shaft portion of the flow measurement rotating blade member is pivoted.

By composing like this, the flow sensor main body comprises the flow sensor piping main body, and the flow sensor unit which is located in the direction of the fluid flow in the flow sensor piping main body.
As a result, for instance, when the foreign matter is adhered to the flow sensor unit and it is broken down, only flow sensor unit can be exchanged, and costs of parts that is required to repair can be reduced.

In addition, for instance, the flow sensor unit and the flow rate detection portion can be inspected beforehand and the performance can be inspected beforehand.
As a result, according to the apparatus used, the flow sensor unit and the flow rate detection portion can be combined, so that best flow sensor corresponding to the use environment can be composed.

In addition, by the vortex flow generating blade member which is located on the upstream side entrance of the fluid of the flow sensor unit, and which is fixed, the vortex flow is surely generated.

Moreover, by the vortex flow generated by this vortex flow generating blade member,
the flow measurement rotating blade member, which is located on the downstream of the vortex flow generating blade member, and in which the shaft portion is pivoted in the a bearing, is rotated surely.
As a result, the flow rate can be measured accurately by the flow rate detection portion which is provided on the peripheral side of the flow sensor main body.

### [Advantageous Effects of Invention]

According to the invention, in the engaging space portion formed by the flexible engaging portion which is formed on a peripheral side of the flow sensor main body,
the flow rate detection portion is provided to elastically deform the flexible engaging portion, or the flexible flow rate detection portion, or both of the flexible engaging portion and the flexible flow rate detection portion.
As a result, by the restoring force of the flexible engaging portion, or the flexible flow rate detection portion, or both of the flexible engaging portion and the flexible flow rate detection portion,
the flow rate detection portion can be detachably engaged with the peripheral side of the flow sensor main body.

That is, when the flow rate detection portion is provided to the peripheral side of the flow sensor main body,
the flexible engaging portion, or the flexible flow rate detection portion, or both of the flexible engaging portion and the flexible flow rate detection portion is elastically deformed.
As a result, the engaging space portion formed by the flexible engaging portion is extended so that it becomes easy to install the flow rate detection portion in the predetermined position in the engaging space portion.

Moreover, after providing the flow rate detection portion to the predetermined position in the engaging space portion,
by the restoring force of the flexible engaging portion, or the flexible flow rate detection portion, or both of the flexible engaging portion and the flexible flow rate detection portion,
the engaging space portion is narrowed, and the flow rate detection portion is fixed by the predetermined position in the engaging space portion.

Oppositely, when the flow rate detection portion is detached from the peripheral side of the flow sensor main body,
by pulling out the flow rate detection portion from the engaging space portion,
the flexible engaging portion, or the flexible flow rate detection portion, or both of the flexible engaging portion and the flexible flow rate detection portion is elastically deformed.
As a result, the engaging space portion is extended so that it becomes easy to detach the flow rate detection portion from the engaging space portion.

Therefore, the flow sensor main body and the flow rate detection portion for performing the flow measurement is easily detachable.
Moreover, it has an easy structure and the number of parts can be also little, and the cost can be reduced.

In addition, even if detaching of the flow sensor main body and the flow rate detection portion is repeated, dropout and loosening are not caused, and the leakage of the fluid might not be caused, and an accurate flow rate can be measured.

Moreover, for instance, only flow sensor main body can be exchanged when the foreign matter is adhered to the flow sensor main body and it is broken down.
Furthermore, for instance, when the flow rate detection portion is broken down by the short etc. by the overcurrent etc., only flow rate detection portions can be exchanged, and costs of parts for requiring repair can be reduced.

In addition, for instance, the flow sensor main body and the flow rate detection portion can be inspected beforehand and the performance can be inspected beforehand.
As a result, according to the apparatus used, the flow sensor main body and the flow rate detection portion can be combined, so that best flow sensor corresponding to the use environment can be composed.

### [Brief Description of Drawings]

[Fig. 1]

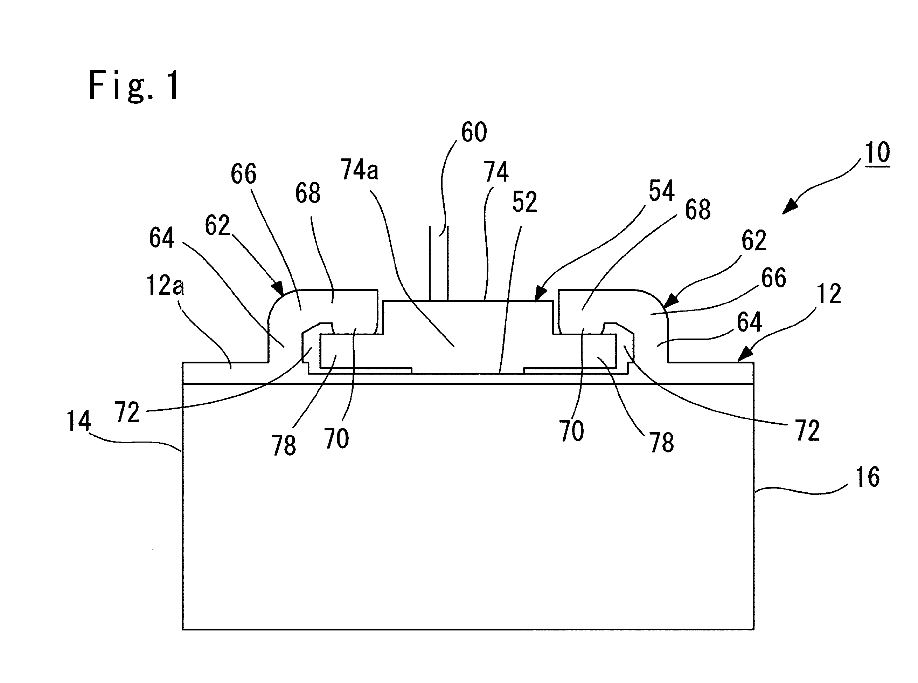

   Fig. 1 is a front view of the flow sensor 10 of the invention.
[Fig. 2]

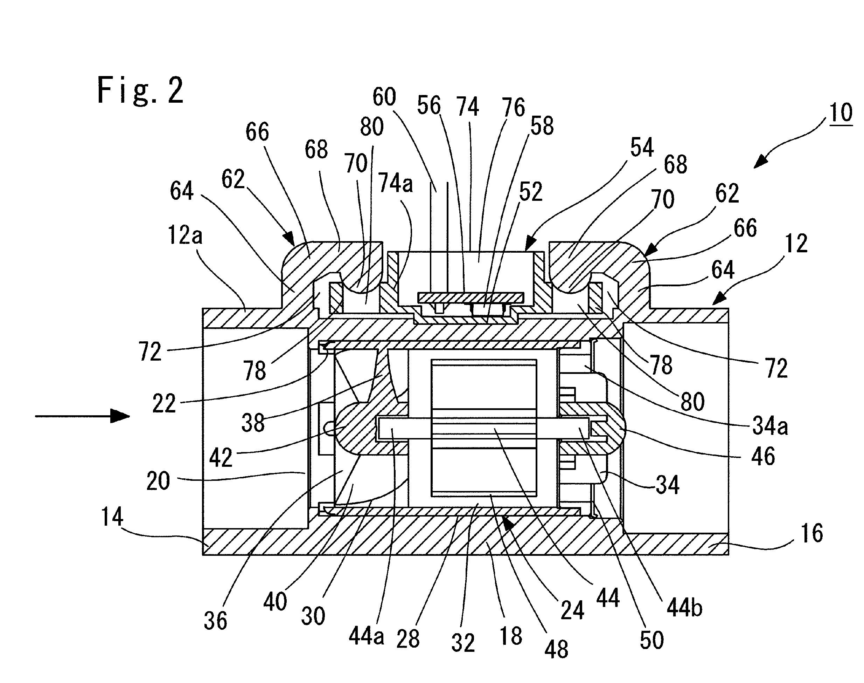

   Fig. 2 is a longitudinal sectional view of the flow sensor 10 of the invention.
[Fig. 3]

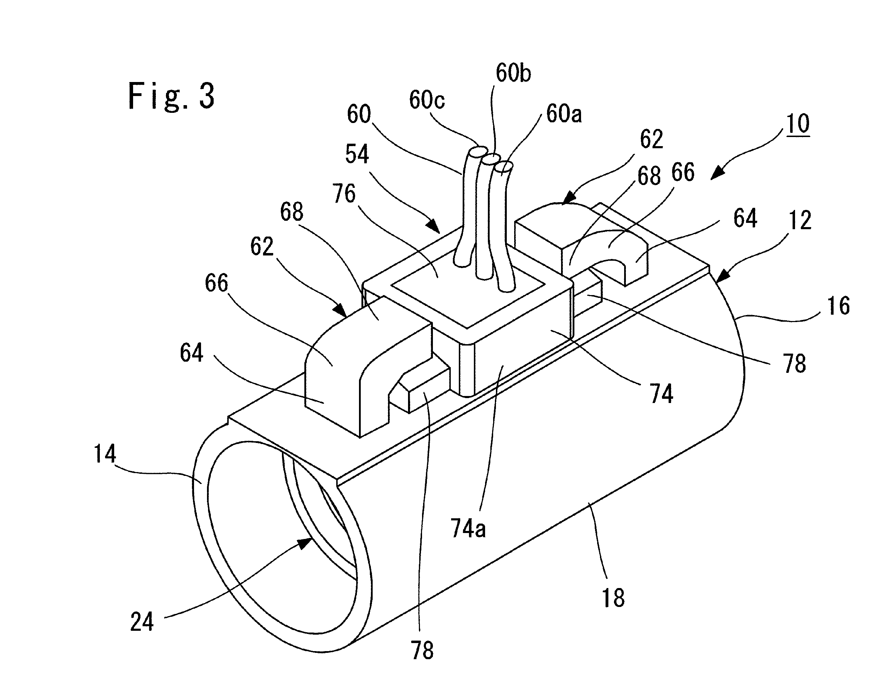

   Fig. 3 is a perspective view of the flow sensor 10 of the invention.
[Fig. 4]

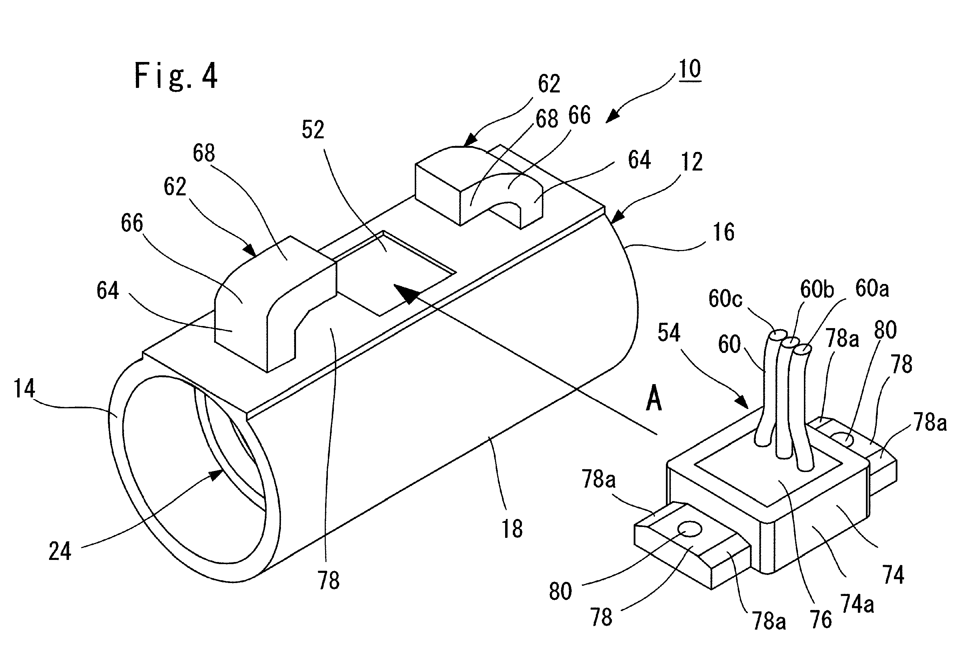

   Fig. 4 is a perspective view that describes the state to provide the flow rate detection portion 54 on the side of the flow sensor main body 12 in the flow sensor 10 of the invention.
[Fig. 5]

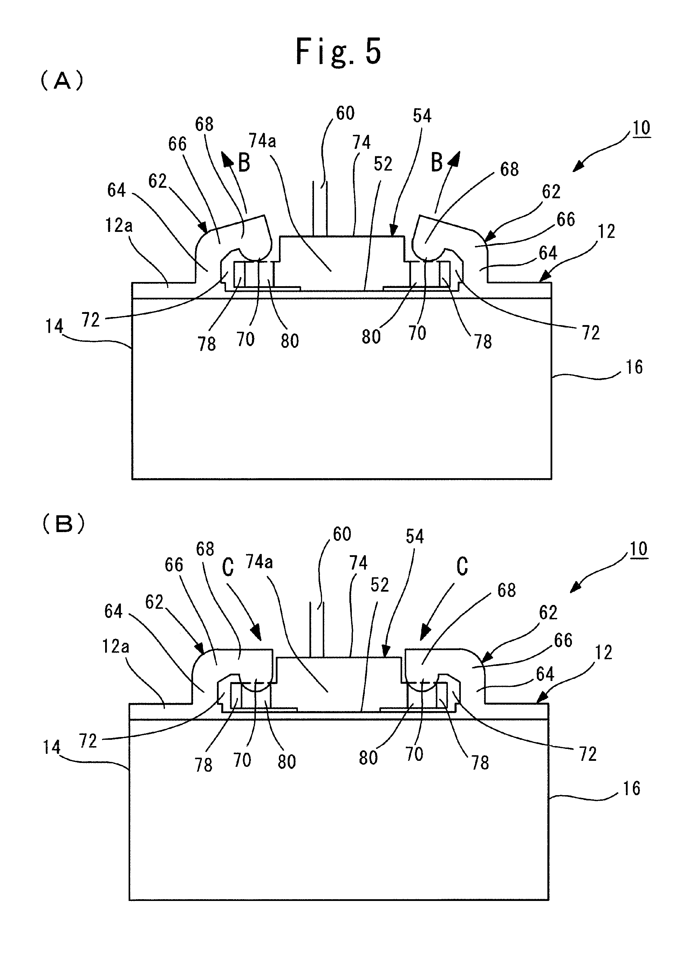

   Fig. 5 is a partial enlarged sectional view that describes the installation of Fig. 4.
[Fig. 6]

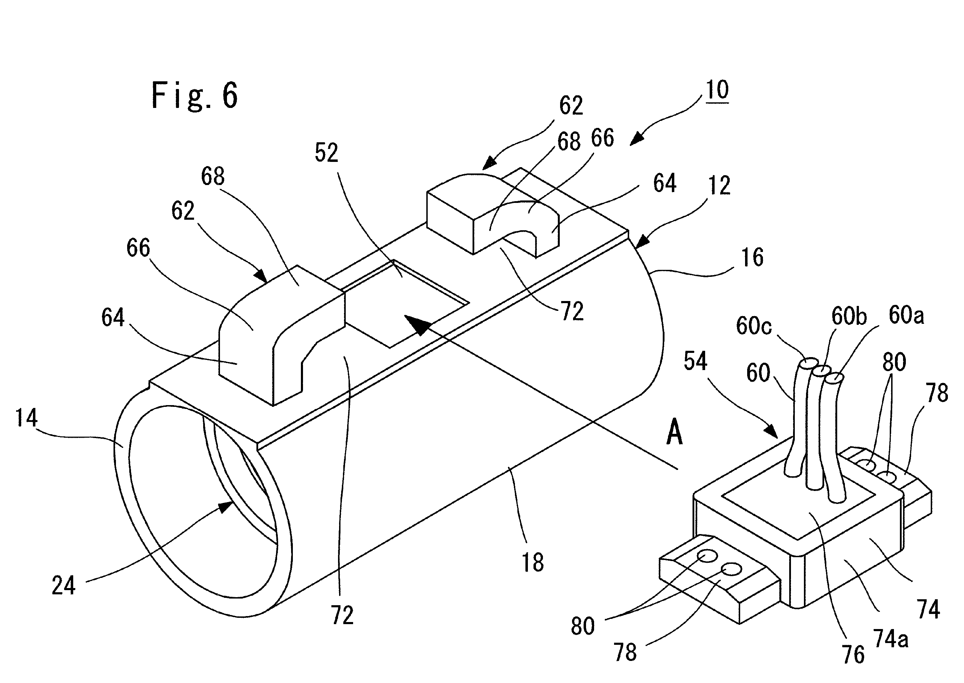

   Fig. 6 is a partial enlarged view of another Embodiment of the flow sensor 10 of the invention.
[Fig. 7]

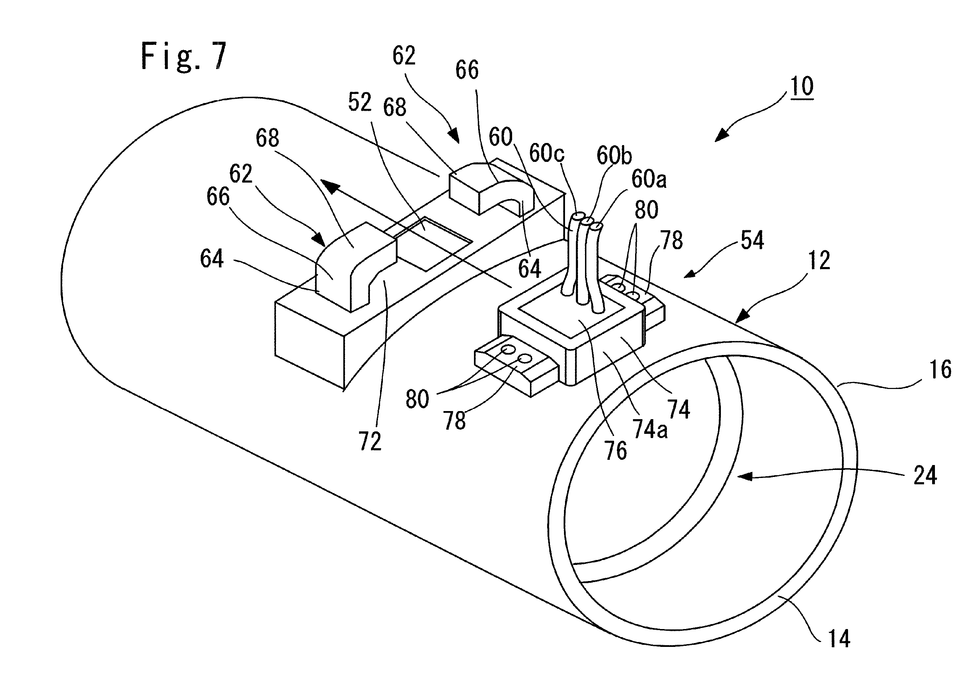

   Fig. 7 is a partial enlarged view of another Embodiment of the flow sensor 10 of the invention.
[Fig. 8]

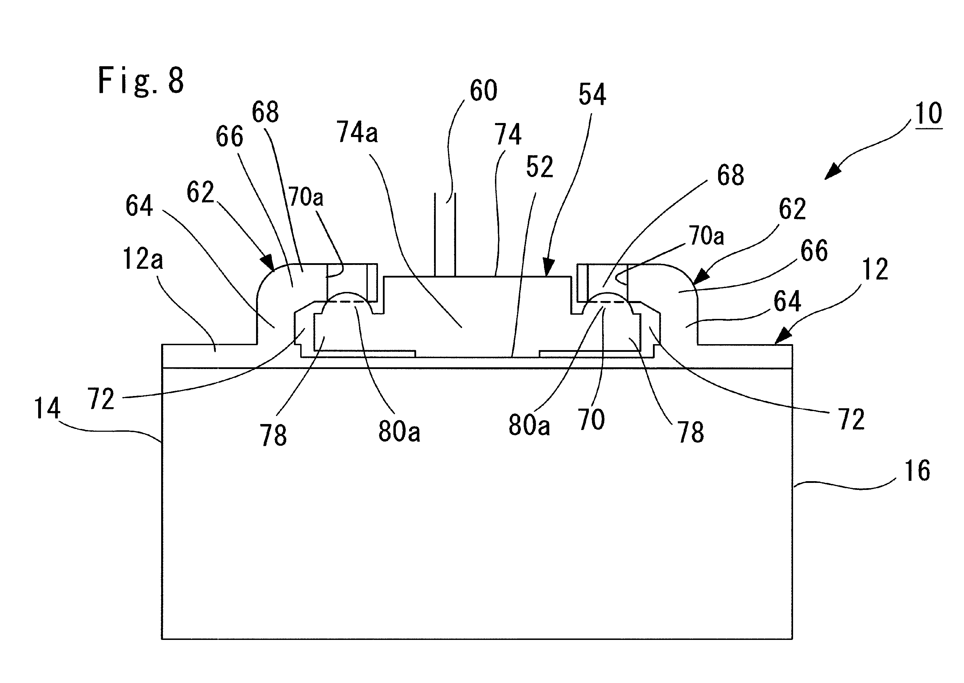

   Fig. 8 is a partial enlarged sectional view of another Embodiment of the flow sensor 10 of the invention.
[Fig. 9]

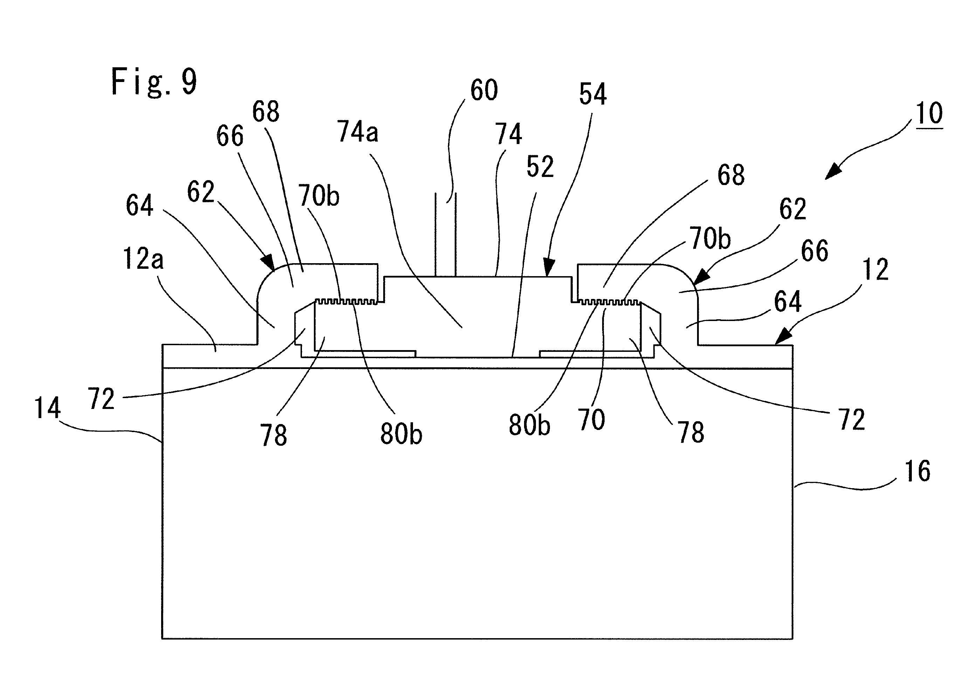

   Fig. 9 is a partial enlarged sectional view of another Embodiment of the flow sensor 10 of the invention.
[Fig. 10]

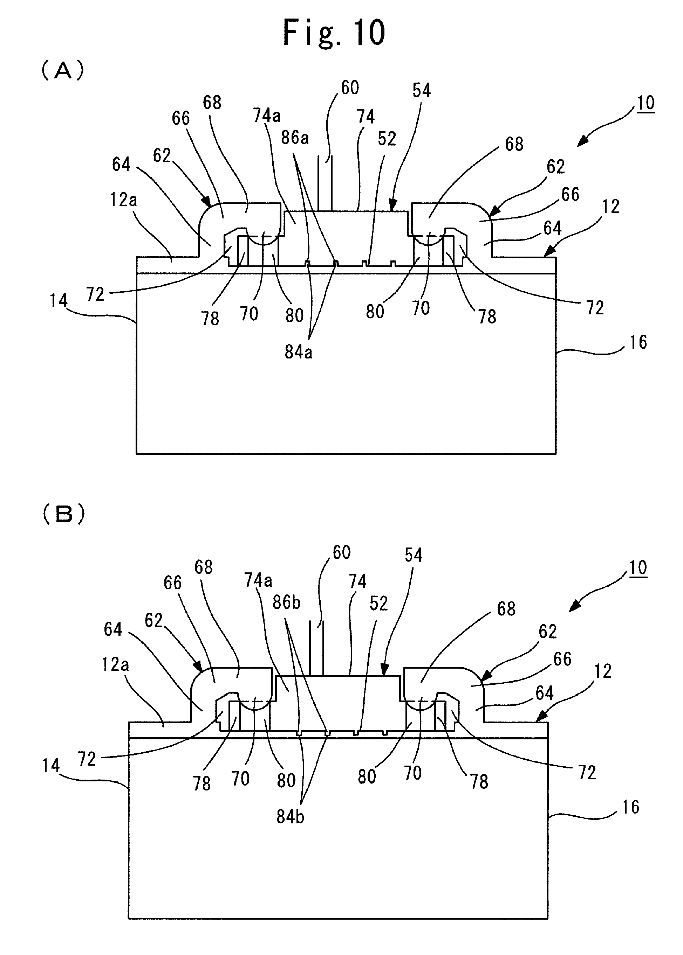

   Fig. 10 is a partial enlarged sectional view of another Embodiment of the flow sensor 10 of the invention.
[Fig. 11]

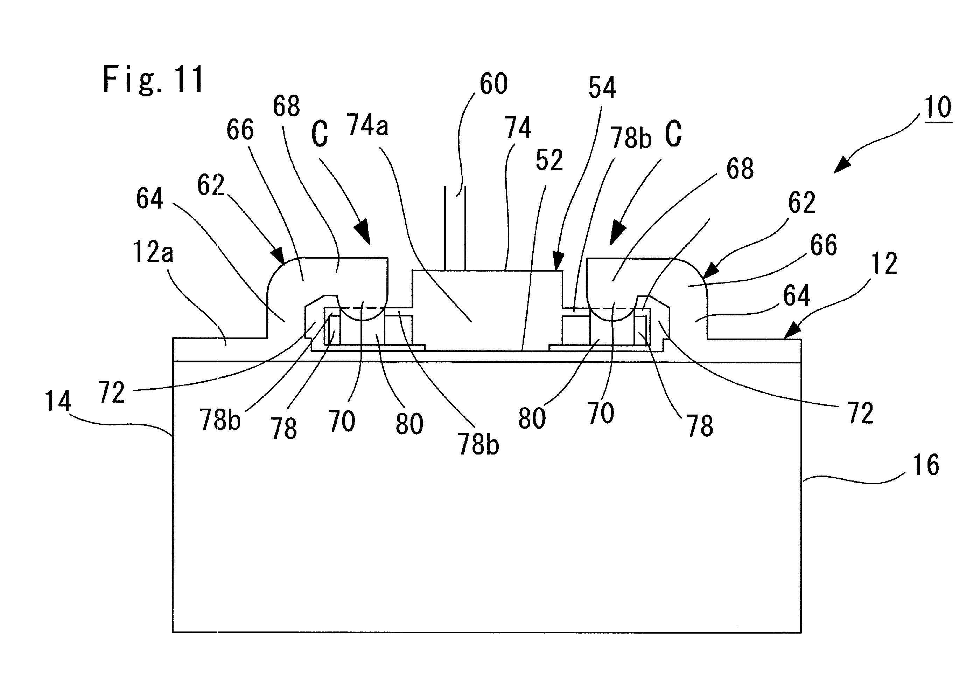

   Fig. 11 is a partial enlarged sectional view of another Embodiment of the flow sensor 10 of the invention.
[Fig. 12]

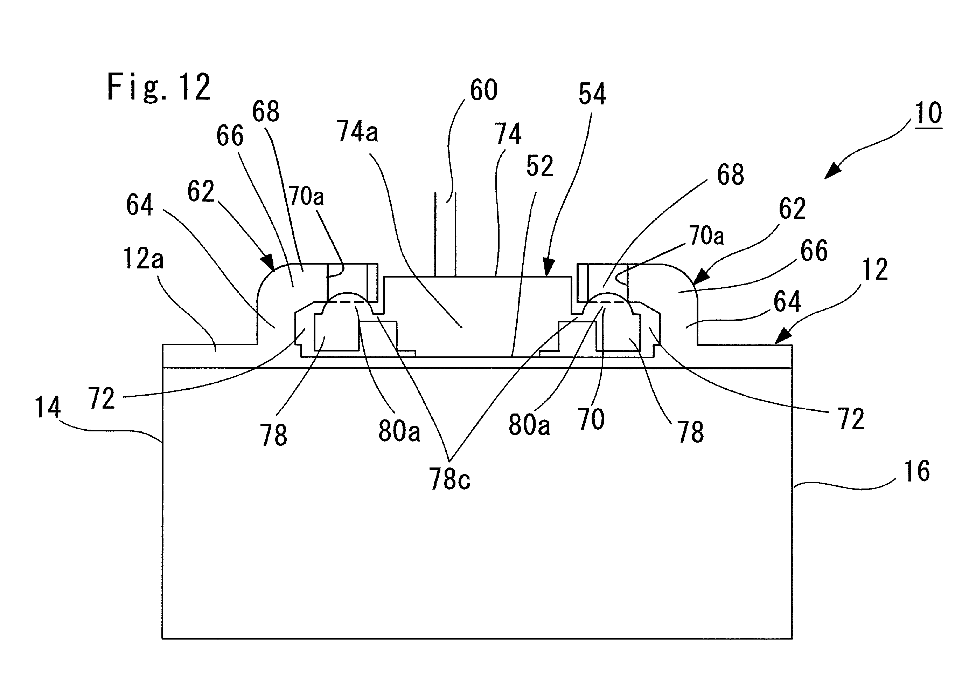

   Fig. 12 is a partial enlarged sectional view of another Embodiment of the flow sensor 10 of the invention.
[Fig. 13]

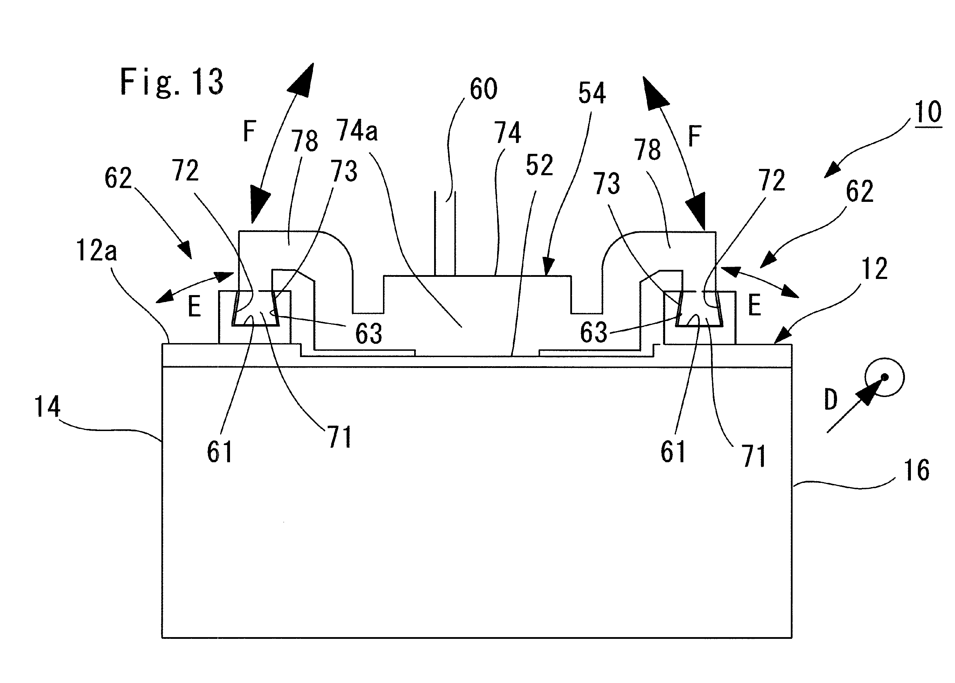

   Fig. 13 is a partial enlarged sectional view of another Embodiment of the flow sensor 10 of the invention.
[Fig. 14]

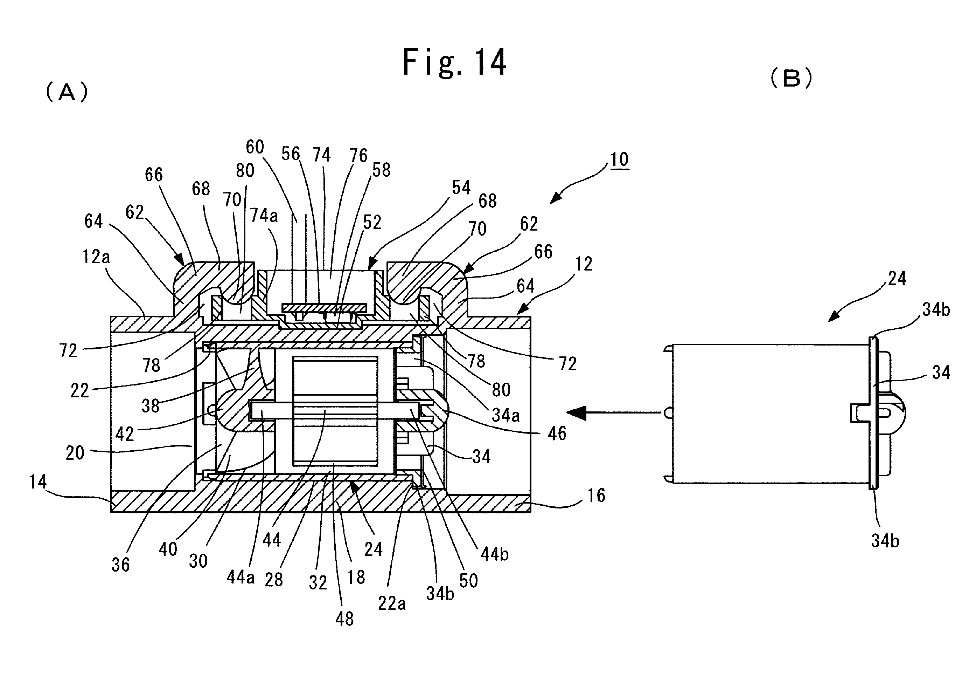

   Fig. 14 is a drawing in which another Embodiment of the flow sensor 10 of the invention is shown, and
   Fig. 14(A) is a longitudinal sectional view of the flow sensor 10 of the invention, and
   Fig. 14(B) is a top view of the flow sensor unit 24 of the flow sensor 10 of the invention.
[Fig. 15]

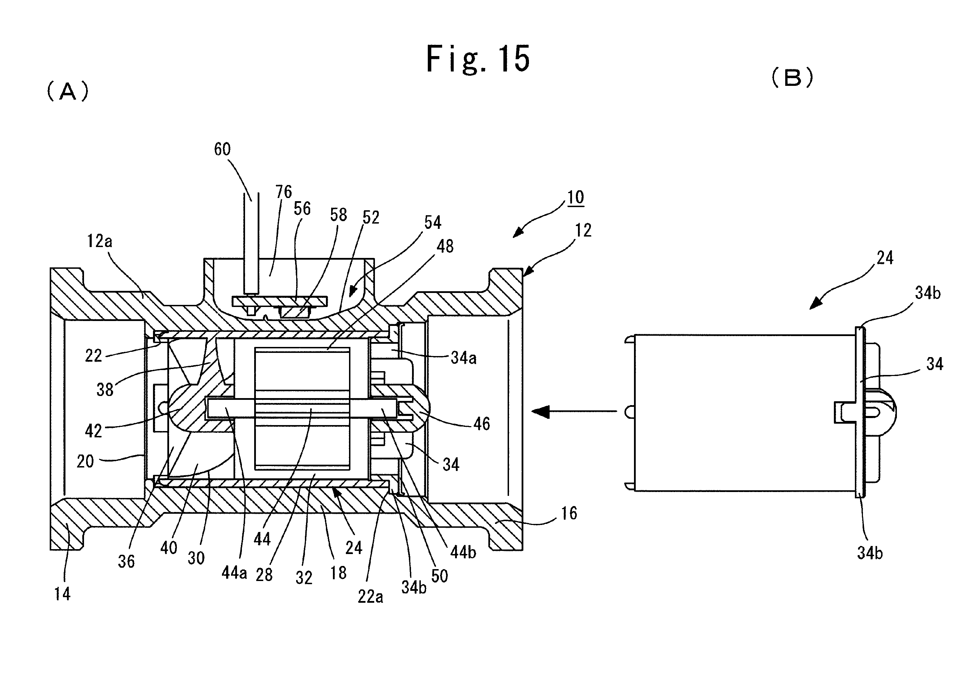

   Fig. 15 is a drawing in which another Embodiment of the flow sensor 10 of the invention is shown, and
   Fig. 15(A) is a longitudinal sectional view of the flow sensor 10 of the invention, and
   Fig. 15(B) is a top view of the flow sensor unit 24 of the flow sensor 10 of the invention.
[Fig. 16]

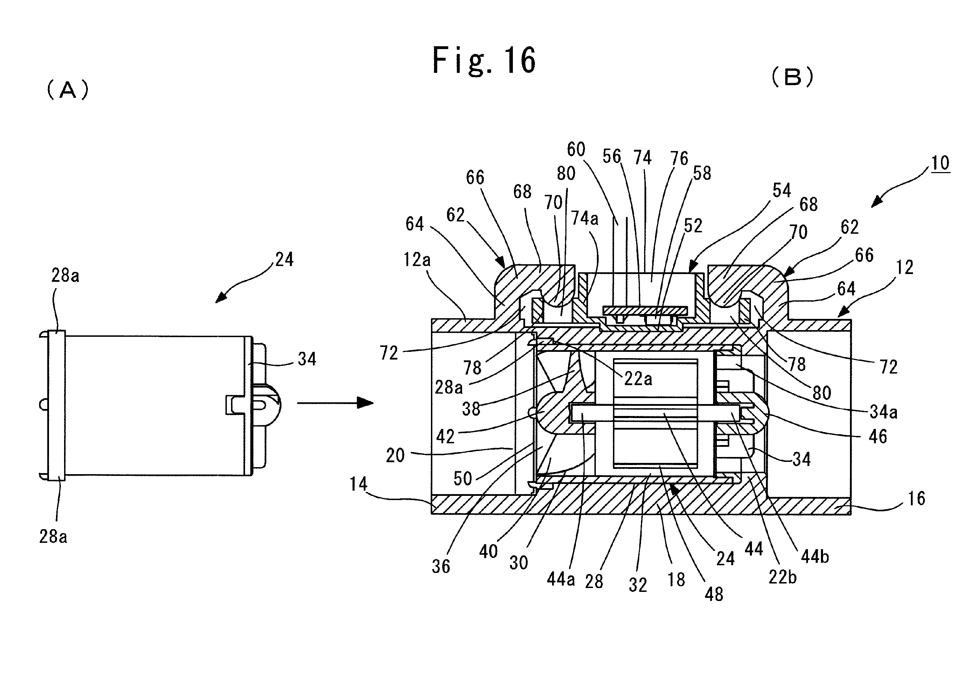

   Fig. 16 is a drawing in which another Embodiment of the flow sensor 10 of the invention is shown, and
   Fig. 16(A) is a top view of the flow sensor unit 24 of the flow sensor 10 of the invention, and
   Fig. 16(B) is a longitudinal sectional view of the flow sensor 10 of the invention.
[Fig. 17]

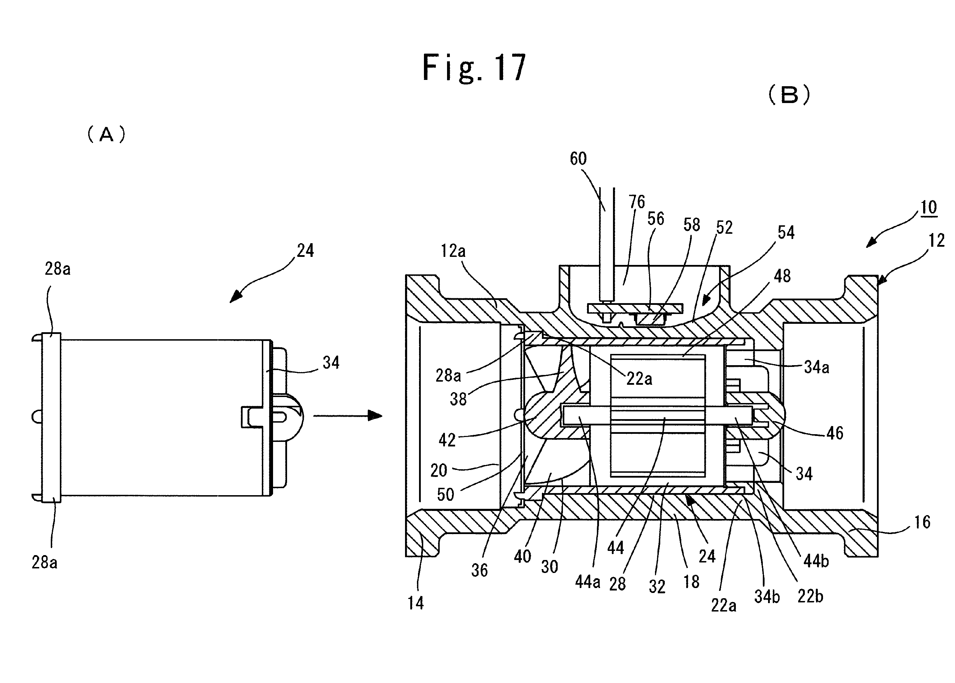

   Fig. 17 is a drawing in which another Embodiment of the flow sensor 10 of the invention is shown, and
   Fig. 17(A) is a top view of the flow sensor unit 24 of the flow sensor 10 of the invention, and
   Fig. 17(B) is a longitudinal sectional view of the flow sensor 10 of the invention.
[Fig. 18]
   Fig. 18 is a longitudinal sectional view of the conventional flow sensor disclosed in this Patent Document 1.
[Fig. 19]
   Fig. 19 is an end view in the direction of A of the flow sensor of Fig. 18.
[Fig. 20]
   Fig. 20 is a longitudinal sectional view of the flow sensor 200 of Patent Document 2.
[Fig. 21]
   Fig. 21 is a longitudinal sectional view of the flow sensor 300 of Patent Document 4.

### [Description of Embodiments]

Hereafter, the embodiment of the invention (Embodiment) is described in the detail or more on the basis of the drawing.

### (Embodiment 1)

Fig. 1 is a front view of the flow sensor 10 of the invention.
Fig. 2 is a longitudinal sectional view of the flow sensor 10 of the invention.
Fig. 3 is a perspective view of the flow sensor 10 of the invention.
Fig. 4 is a perspective view that describes the state to provide the flow rate detection portion 54 on the side of the flow sensor main body 12 in the flow sensor 10 of the invention.
Fig. 5 is a partial enlarged sectional view that describes the installation of Fig. 4.

In Fig. 1 - Fig. 4, reference numeral 10 shows a flow sensor 10 of the invention in as a whole.

As shown in Fig. 1-Fig. 4, the flow sensor 10 of the invention includes a flow sensor main body 12.
In addition, this flow sensor main body 12 includes a flow sensor piping main body 12a having the substantially circular tube shape in which the fluid is flowed.
This flow sensor piping main body 12a, as shown in Fig. 1-Fig. 4, includes an entrance side piping portion 14, and an outlet side piping portion 16, and a sensor accommodating portion 18 provided between these entrance side piping portion 14 and outlet side piping portion 16.

As shown in Fig. 1-Fig. 4, inside of the sensor accommodating portion 18 of flow sensor piping main body 12a, a flow sensor main body accommodating portion 20 including the through hole having the substantially cylindrical shape is formed in the direction of the fluid flow.

Moreover, on the inner periphery wall of this flow sensor main body accommodating portion 20, a step portion 22 is formed on the side of the entrance side piping portion 14. In addition, as shown in Fig. 2, on this flow sensor main body accommodating portion 20, a flow sensor unit 24 is located in the direction of the fluid flow.

As shown in Fig. 2, the flow sensor unit 24 includes a flow sensor unit having the composition similar to the conventional flow sensor unit 126 shown in Fig. 18.

That is, a vortex flow generating blade member 30 is integrally composed with a casing 28 having the cylindrical shape.
In addition, a flow measurement rotating blade member 32 and an outlet member 34 are integrally contained in the casing 28 having the cylindrical shape.
As a result, the flow sensor unit 24 is composed.

In addition, at an entrance 36 on the upstream side of the casing 28, the fixed vortex flow generating blade member 30 which generates the vortex flow is provided.

Moreover, as shown in Fig. 2, the vortex flow generating blade member 30 includes a plurality of blade members 38 (5 blade members in this Embodiment) formed like the spiral. Moreover, between a plurality of the blade members 38 formed like this, five vortex flow generating introducing path 40 are formed like the spiral.

Moreover, on the downstream of the vortex flow generating blade member 30, a flow measurement rotating blade member 32, which is rotated by the vortex flow generated by passing through the vortex flow generating introducing path 40 of the vortex flow generating blade member 30,is rotatably provided.

That is, a bearing 42 is formed on the center of the vortex flow generating blade member 30.
In addition, one edge 44a of a shaft portion 44 of the flow measurement rotating blade member 32 is provided to this bearing 42.

In addition, on the downstream of this flow measurement rotating blade member 32, an outlet member 34, to exhaust the fluid which is passed through this flow measurement rotating blade member 32, is provided.
A plurality of outlets 34a to exhaust the fluid is formed on this outlet member 34.

Moreover, a bearing 46 is formed on the center of this outlet member 34.
In addition, the other edge 44b of the shaft portion 44 of the flow measurement rotating blade member 32 is provided to this bearing 46.

By composing like this, by being pivoted by the bearing 42 of the vortex flow generating blade member 30 and the bearing 46 of the outlet member 34, the flow measurement rotating blade member 32 is rotatably provided.

In addition, as shown in Fig. 2, as for the flow measurement rotating blade member 32, four blade portions 48, which is formed and spaced mutually by the central angle degree of 90°, is provided.
The tip of these blade portions 48 is magnetized respectively alternately in S pole and N pole.

In addition, as shown in Fig. 2, this flow sensor unit 24 is inserted from the side of the outlet side piping portion 16 of the flow sensor piping main body 12a in the flow sensor main body accommodating portion 20.

Moreover, the side of the vortex flow generating blade member 30 is abutted to the step portion 22, which is formed on the inner periphery wall of the flow sensor main body accommodating portion 20.
As a result, the flow sensor unit 24 is disposed in the flow sensor main body 20 by fixing the side of the outlet member 34 with a fixing ring 50.

On the other hand, as shown in Fig. 1-Fig. 4, on the peripheral side of the sensor accommodating portion 18 of the flow sensor piping main body 12a, a recess 52 having rectangular shape is formed.
On the recess 52, a flowing quantity detection portion 54, in which the flow measurement is performed by the rotating of the flow measurement rotating blade member 32, is provided.

In addition, as described later, the shape of this recess 52 is formed to the shape that is identified with the accommodating casing main body 74a of the accommodating casing 74 described later.

In the flow rate detection portion 54, for instance, by hall IC etc., together with the rotation of the flow measurement rotating blade member 32, by change of flux density by magnetized tip of the blade portion 48, or by outputting the change of the field direction as a pulse signal, flowing quantity is measured.

Specifically, as for the flow rate detection portion 54, a substrate 56 is provided as shown in Fig.1 - Fig.4, and a hall IC 58 is located on this substrate 56.
Moreover, together with the rotation of the flow measurement rotating blade member 32, the change in the field direction by the magnetized tip of the blade portion 48 is detected by the hall IC 58 and the pulse signal is generated.

That is, direct current normal rated voltage is applied to the hall IC 58 through a terminal 60.
As a result, the voltage of the frequency corresponding to the rotation number (flow rate) of the flow measurement rotating blade member 32 is output through the terminal 60.

Moreover, as shown in Fig.1 - Fig.4, the terminal 60 is connected with three electric wires of a common line (GND) 60a and an input power source line (Vcc) 60b and an output signal line (Vout) 60c.

Moreover, as shown in Fig.1 - Fig.4, on the peripheral side of the sensor accommodating portion 18 of the flow sensor piping main body 12a, two flexible engaging portions 62 having an engaging piece shape are formed as they are respectively protruded outside of the longitudinal direction of a recess 52 having rectangular shape.

In this case, in the specification, as described later, wording "flexible" means that it has a property in which at least one of the engaging portion 62 or the flow rate detection portion 54 (an engaging flange 78) can be deformed elastically and they can be returned in former state by their restoring force.

Moreover, as shown in Fig.1 - Fig.4,
these engaging portions 62 comprises,
a flange portion 64 which is protruded radially outside from peripheral side of the sensor accommodating portion 18 of the flow sensor piping main body 12a,
a bending portion 66 which is bent in the direction that approaches each other from the flange portion 64, and
extended engaging portions 68 which are extended in the direction that approaches each other from the this bending portion 66.

Moreover, as shown in Fig. 1-Fig. 4, on the lower surface of the extended engaging portion 68 of the engaging portion 62, an engaging protrusion 70 is formed as it is protruded downwardly.
In addition, as shown in Fig. 1-Fig. 4, between the engaging portion 62 and the peripheral side of the sensor accommodating portion 18 of the flow sensor piping main body 12a, an engaging space portion 72 is formed by the engaging portion 62.

On the other hand, the flow rate detection portion 54 includes an accommodating casing 74 having substantially casing shape.
In this accommodating casing 74, the substrate 56 and the hall IC 58, etc. are accommodated and they are sealed with a sealing resin 76.

Moreover, as shown in Fig. 1-Fig. 4, an engaging flange 78 is formed on both ends of the longitudinal direction of the accommodating casing 74.
In addition, an engaging recess 80 is formed on the substantially center section of this engaging flange 78.

As for this engaging recess 80, as described later,
when the flow rate detection portion 54 is provided on the side of the flow sensor main body 12 (i.e. in this Embodiment, on the sensor accommodating portion 18 of the flow sensor piping main body 12a),
the engaging protrusion 70 of the extended engaging portion 68 of the engaging portion 62 is fitted to the engaging recess 80 of the accommodating casing 74, so that it is fixed in the engaging space portion 72.

Therefore, the shape of the engaging recess 80 of the accommodating casing 74 has a substantially identical shape of the engaging protrusion 70 of the engaging portion 62. In this case, in this Embodiment, the shape of the engaging protrusion 70 is made like a semicircle dome and the shape of the engaging recess 80 is made circular through hole shape.

However, their shapes are not especially limited.
In addition, various amendments are possible such that for instance, the shape of the engaging protrusion 70 can be a longitudinal shape and the shape of the engaging recess 80 can be a slit groove shape.

In this case, as described later, it is desirable that in order to facilitate detaching the flow rate detection portion 54 to the side of the flow sensor main body 12, like this Embodiment, the shape of the engaging protrusion 70 is a semicircle dome shape.
Moreover, it is desirable that in order to facilitate detaching to the engaging recess 80, the engaging protrusion 70 of the engaging portion 62 has a taper surface shape.

Moreover, the number of these engaging protrusion 70 and engaging recess 80 is not especially limited, and for instance, it is also possible to provide plurality of them (two in case of Embodiment of Fig. 5) as shown in Fig. 6.

In addition, the shape of the engaging space portion 72 formed by the engaging portion 62 is such that in order to set the engaging flange 78 of the accommodating casing 74, it is formed to the shape which is identified with the shape of the engaging flange 78 of the accommodating casing 74.

In the flow sensor 10 of the invention composed like this, as shown in Fig. 4-Fig. 5, the flow rate detection portion 54 may be provided on the side of the flow sensor main body 12 (i.e. in this Embodiment, on the sensor accommodating portion 18 of the flow sensor piping main body 12a).

First of all, as shown in arrow A of Fig. 4, from the transverse direction of the flow sensor piping main body 12a, the flow rate detection portion 54, that is, the engaging flange 78 of the accommodating casing 74 is inserted in the engaging space portion 72 formed by the engaging portion 62. In addition, of course, from the transverse direction of the flow sensor piping main body 12a on the side opposed to arrow A of Fig. 4, the engaging flange 78 of the accommodating casing 74 may be inserted in the engaging space portion 72 formed by the engaging portion 62.

As a result, as shown in Fig. 5(A), the flow rate detection portion 54 is provided in the engaging space portion 72 formed by flexible engaging portion 62, that is the engaging protrusion 70 of the engaging flange 78 of the accommodating casing 74 is provided in the engaging space portion 72 formed by flexible engaging portion 62.
Consequently, as shown by arrow B of Fig. 5(A), the flexible engaging portion 62 is elastically deformed, and the engaging space portion 72 is extended.

In this case, on the front end portion and the rear end portion of the engaging flange 78 of the accommodating casing 74, as shown in Fig. 4, in order to facilitate that the flexible engaging portion 62 is elastically deformed and the engaging space portion 72 is extended, an inclination guide face 78a having a taper shape is formed.

As a result, in the predetermined position in the engaging space portion 72, that is, in the position, in which the engaging protrusion 70 of the extended engaging portion 68 of the engaging portion 62 is identified with the engaging recess 80 of the accommodating casing 74, it becomes easy to install the flow rate detection portion 54 (i.e. the accommodating casing 74).

In addition, thus, in the predetermined position in the engaging space portion 72, that is, in the state that the engaging protrusion 70 of the extended engaging portion 68 of the engaging portion 62 is moved to the position, in which it is identified with the engaging recess 80 of the accommodating casing 74, as shown by arrow C of Fig. 5(B), the engaging space portion 72 is narrowed by the restoring force of the flexible engaging portion 62.
As a result, the flow rate detection portion 54 (i.e. the accommodating casing 74) is fixed by the predetermined position in the engaging space portion 72.

In addition, in this case, the shape of recess 52 of the peripheral side of the sensor accommodating portion 18 of the flow sensor piping main body 12a is formed to the shape that it is identified with the accommodating casing main body 74a of the accommodating casing 74 of the flow rate detection portion 54.
Therefore, in the predetermined position in the engaging space portion 72, the fixing of the flow rate detection portion 54(i.e. the accommodating casing 74) is more assured.

Of course, it is also possible that such recess 52 is not formed on the peripheral side of the sensor accommodating portion 18 of the flow sensor piping main body 12a.

Moreover, it is also possible that neither engaging protrusion 70 of the extended engaging portion 68 of the engaging portion 62 nor the engaging recess 80 of the accommodating casing 74 are installed.
In this case, in the state that the engaging space portion 72 is narrowed by the restoring force of the flexible engaging portion 62, in order to securely fix the engaging flange 78 of the accommodating casing 74 by engaging portion 62, the width of engaging space portion 72 is narrowed beforehand. As a result, it may become so-called "press fitting state".

Oppositely, when the flow rate detection portion 54 is detached from the side of the flow sensor main body 12, the flow rate detection portion 54 (i.e. the accommodating casing 74) is pulled out from the engaging space portion 72 in the reverse direction of the direction of arrow A of Fig. 4. As a result, as shown in arrow B of Fig. 5(A) from the state of Fig. 5 (B), the flexible engaging portion 62 is elastically deformed and the engaging space portion 72 is extended.
Consequently, it can be easily detached from engaging space portion 72.

In addition, in this Embodiment, as shown in arrow A of Fig. 4, from the transverse direction of the flow sensor piping main body 12a, the engaging flange 78 of the accommodating casing 74 is inserted in the engaging space portion 72. However, as shown in the arrow of Fig. 7, from the longitudinal direction of the flow sensor piping main body 12a, the engaging flange 78 of the accommodating casing 74 may be inserted in the engaging space portion 72.

The flow sensor 10 of the invention composed like this is operated as follows.

First of all, the fluid introduced from the entrance side piping portion 14 of the upstream sides of the flow sensor piping main body 12a is entered in the flow sensor unit 24 located on the flow sensor main body accommodating portion 20, at the sensor accommodating portion 18 of flow sensor piping main body 12a.

In addition, the fluid which is entered in the flow sensor unit 24 is passed through the vortex flow generating introducing path 40 of the vortex flow generating blade member 30, so that the vortex flow is generated.

Moreover, by the vortex flow generated like this, the flow measurement rotating blade member 32 is rotated. In the flow rate detection portion 54, for instance, by hall IC etc., together with the rotation of the flow measurement rotating blade member 32, by change of flux density by magnetized tip of the blade portion 48, or by outputting the change of the field direction as a pulse signal, flowing quantity is measured.

In addition, the fluid which is passed through this flow measurement rotating blade member 32 is exhausted outside through a plurality of the outlet 34a of the outlet member 34 from the outlet side piping portion 16 of the flow sensor piping main body 12a.

Specifically, as for the flow rate detection portion 54, the substrate 56 is provided as shown in Fig. 1 and Fig. 2, and the hall IC 58 is located on this substrate 56. Moreover, together with the rotation of the flow measurement rotating blade member 32, the change in the field direction by the magnetized tip of the blade portion 48 is detected by the hall IC 58 and the pulse signal is generated.

That is, direct current normal rated voltage is applied to the hall IC 58 through the terminal 60.
As a result, the voltage of the frequency corresponding to the rotation number (flow rate) of the flow measurement rotating blade member 32 is output through the terminal 60. Consequently, the flow rate of the fluid that flows in the flow sensor piping main body 12a is measured.

By composing like this, in the engaging space portion 72 formed by the flexible engaging portion 62 which is formed on a peripheral side of the flow sensor main body 12, the flow rate detection portion 54 is provided to elastically deform the flexible engaging portion 62.
As a result, by the restoring force of the flexible engaging portion 62, the flow rate detection portion 54 can be detachably engaged with the peripheral side of the flow sensor main body 12.

Therefore, the flow sensor main body 12 and the flow rate detection portion 54 for performing the flow measurement is easily detachable.
Moreover, it has an easy structure and the number of parts can be also little, and the cost can be reduced.

In addition, even if detaching of the flow sensor main body 12 and the flow rate detection portion 54 is repeated, dropout and loosening are not caused, and the leakage of the fluid might not be caused, and an accurate flow rate can be measured.

Moreover, for instance, only flow sensor main body 12 can be exchanged when the foreign matter is adhered to the flow sensor main body 12 and it is broken down.
Furthermore, for instance, when the flow rate detection portion is broken down by the short etc. by the overcurrent etc., only flow rate detection portion 54 can be exchanged, and costs of parts for requiring repair can be reduced.

In addition, for instance, the flow sensor main body 12 and the flow rate detection portion 54 can be inspected beforehand and the performance can be inspected beforehand. As a result, according to the apparatus used, the flow sensor main body 12 and the flow rate detection portion 54 can be combined, so that best flow sensor 10 corresponding to the use environment can be composed.

In addition, in this Embodiment, the engaging protrusion 70 is formed on the engaging portion 62, and the engaging recess 80 is formed on the flow rate detection portion 54, that is, on the accommodating casing 74.
However, as shown in Fig. 8, an engaging recess 70a may be formed on the engaging portion 62, and an engaging protrusion 80a is formed on the accommodating casing 74.

Moreover, in this Embodiment, the engaging protrusion 70 is formed on the engaging portion 62, and the engaging recess 80 is formed on the flow rate detection portion 54, that is, on the accommodating casing 74.
However, as shown in Fig. 9, the engaging between a minute convexoconcave 70b formed on the engaging portion 62 and a minute convexoconcave 80b formed on the accommodating casing 74 may be applicable.

By composing like this, the minute convexoconcave 70b formed on the engaging portion 62 is convexoconcave-engaged with the minute convexoconcave 80b formed on the accommodating casing 74.
As a result, the engaging between the flexible engaging portion 62 and the flow rate detection portion 54 is attained.
Consequently, the engaging force between the minute convexoconcaves is increased, and by the flexible engaging portion 62, the flow rate detection portion 54 can be surely fixed in the engaging space portion 72.

In addition, as shown in Fig. 10(A), on the peripheral side of the sensor accommodating portion 18 of the flow sensor piping main body 12a which composes the flow sensor main body 12, an engaging protrusion 84a, which is extended in the transverse direction of the flow sensor piping main body 12a, may be protruded.
Moreover, on the accommodating casing main body 74a of the accommodating casing 74 of the flow rate detection portion 54, an engaging recess 86a, in which this engaging protrusion 84a is engaged and which is extended to the transverse direction of the flow sensor piping main body 12a, may be formed.

Moreover, as shown in Fig. 10(B), on the peripheral side of the sensor accommodating portion 18 of the flow sensor piping main body 12a which composes the flow sensor main body 12, an engaging recess 84b, which is extended in the transverse direction of the flow sensor piping main body 12a, may be protruded.
Moreover, on the accommodating casing main body 74a of the accommodating casing 74 of the flow rate detection portion 54, an engaging protrusion 86b, in which this engaging recess 84b is engaged and which is extended to the transverse direction of the flow sensor piping main body 12a, may be formed.

By composing like this, the engaging protrusion 84a or the engaging recess 84b that is formed on the peripheral side of the flow sensor main body 12 is convexoconcave-engaged with the engaging recess 86a or the engaging protrusion 86b that is formed on the peripheral side of the flow sensor main body 12.
As a result, the engaging between the side of the flow sensor main body 12 and the flow rate detection portion 54 is attained.
Consequently, the flow rate detection portion 54 can be surely fixed in the engaging space portion 72.

Moreover, when the flow rate detection portion 54 is provided in the engaging space portion 72 of the flow sensor main body 12,
the engaging protrusion 84a or the engaging recess 84b that is formed on the peripheral side of the flow sensor main body 12 and the engaging recess 86a or the engaging protrusion 86b that is formed on the flow rate detection portion 54, are guided.
As a result the installation can be smoothly attained.

In addition, in this case, as mentioned above, as shown in the partial enlarged view of Fig. 7, from the longitudinal direction of the flow sensor piping main body 12a, the engaging flange 78 of the accommodating casing 74 is inserted in the engaging space portion 72.
In such a case, the engaging protrusion 84a or the engaging recess 84b that is formed on the side of the flow sensor main bodies 12 and the engaging recess 86a or the engaging protrusion 86b that is provided on the flow rate detection portion 54, though not shown in the drawing, may be formed as extending in the longitudinal direction of the flow sensor piping main body 12a.

Moreover, in this Embodiment, in the engaging space portion 72 of the flow sensor main body 12, the Flow rate detection portion 54 is provided to elastically deform the flexible engaging portion 62.
However, the flexible flow rate detection portion 54 (i.e. the engaging flange 78) or both of the flexible engaging portion 62 and the flexible flow rate detection portion 54 (i.e. the engaging flange 78) may be provided as they are elastically deformed.

Moreover, the material of the flexible engaging portion 62 and the flexible flow rate detection portion 54 (i.e. the engaging flange 78) may be appropriately selected.
As a result, for instance, the material of the flexible flow rate detection portion 54 (i.e. the engaging flange 78) (for instance, plastic) is formed from a raw material that is softer than the material of the flexible engaging portion 62 (for instance, plastic).
Consequently, the flexible flow rate detection portion 54 (i.e. the engaging flange 78) is elastically deformed.
As a result, in the engaging space portion 72 of the flow sensor main body 12, the flow rate detection portion 54 can be provided.

Moreover, as shown in Fig. 11, a thin portion 78b is formed partially on the flexible engaging flange 78 of the flow rate detection portion 54.
Consequently, the flexible flow rate detection portion 54 (i.e. the engaging flange 78) is elastically deformed.
As a result, in the engaging space portion 72 of the flow sensor main body 12, the flow rate detection portion 54 can be provided.

In addition, as shown in Fig. 12, a thin portion 78c is formed partially on the flexible engaging flange 78 of the flow rate detection portion 54.
Consequently, the flexible flow rate detection portion 54 (i.e. the engaging flange 78) is elastically deformed.
As a result, in the engaging space portion 72 of the flow sensor main body 12, the flow rate detection portion 54 can be provided.

Moreover, in this Embodiment, as shown in Fig. 1 and Fig. 2, on the peripheral side of the sensor accommodating portion 18 of the flow sensor piping main body 12a, two flexible engaging portions 62 having the engaging piece shape are formed as they are protruded.
As a result, between the engaging portion 62 and the peripheral side of the sensor accommodating portion 18 of the flow sensor piping main body 12a, the engaging space portion 72 is formed by the engaging portion 62.

However, as shown in Fig. 13, on the peripheral side of the sensor accommodating portion 18 of the flow sensor piping main body 12a, two flexible engaging space portions 72 in which an engagement recess 61 is included, so that the engaging portion 62 is protruded.

In addition, the engaging flange 78 of the flow rate detection portion 54 is formed as like curving, so that it is as engaging piece shape.
Moreover, on the tip portion of the engaging flange 78, an engagement protrusion 71 may be formed, such that it is fitted in the engaging space portion 72 in which the engagement recess 61 of this engaging portion 62 is included.

In this case, as shown in Fig. 13, on the engagement recess 61 that composes the engaging space portion 72, a taper surface 63 having a taper wedged shape is formed.
Moreover, on the engagement protrusion 71 at the tip of the engaging flange 78 of the flow rate detection portion 54, a taper surface 73 which has complementary shape against this taper surface 63 is formed.

As a result, it is desirable that the engagement protrusion 71 of the engaging flange 78 of the flow rate detection portion 54 does not fall off from the engagement recess 61 of the engaging space portion 72.
Consequently, it is desirable to prevent the flow rate detection portion 54 from dropping.

In addition, in this case, as shown by arrow D of Fig. 13, from the transverse direction of the flow sensor piping main body 12a (i.e. front side or back side of the paper of Fig. 13), the engagement protrusion 71 of the engaging flange 78 of the flow rate detection portion 54 may be slidably inserted in the engaging space portion 72 including the engagement recess 61 of the engaging portion 62.

In this case, when the engagement protrusion 71 of the engaging flange 78 of the flow rate detection portion 54 is inserted in the engagement recess 61 that composes the engaging space portion 72, the engagement recess 61 of the flexible engaging portion 62, as shown by arrow E of Fig. 13, is provided such that it is elastically deformed as extended outside.
As a result, by the restoring force of the engagement recess 61 of the flexible engaging portion 62, the flow rate detection portion 54 (i.e. the engagement protrusion 71 of the engaging flange 78 of the flow rate detection portion 54) can be detachably engaged with the peripheral side of the flow sensor main body 12.

As shown by arrow F of Fig. 13, the engaging flange 78 of the flow rate detection portion 54 is bent upwardly.
As a result, by the restoring force and by using a so-called "Snap Fit" method, into the engaging space portion 72 including the engagement recess 61 of the engaging portion 62, the engagement protrusion 71 at the tip of the engaging flange 78 is fitted, so that it may be detachably fitted.

In this case, though not shown in the drawing, on the corner portion in the lower end of the engagement protrusion 71 at the tip of the engaging flange 78 of the flow rate detection portion 54, a guide slope which is inclined inwardly may be formed.
Moreover, on the top portion on the taper surface 63 of the engagement recess 61 of the engaging portion 62, a guide slope, which is complementary to this engagement protrusion 71, may be formed.

As a result, they are guided along these guide slopes, so that into the engagement recess 61 including the engaging space portion 72, the engagement protrusion 71 of the engaging flange 78 of the flow rate detection portion 54 is inserted.
In this case, the engagement recess 61 of the flexible engaging portion 62, as shown by arrow E of Fig. 13, is provided such that it is elastically deformed as extended outside.

### (Embodiment 2)

Fig. 14 is a drawing in which another Embodiment of the flow sensor 10 of the invention is shown, and
Fig. 14(A) is a longitudinal sectional view of the flow sensor 10 of the invention, and
Fig. 14(B) is a top view of the flow sensor unit 24 of the flow sensor 10 of the invention.

The flow sensor 10 of this Embodiment is basically similar composition of the Embodiment shown in Fig. 1-Fig. 10.
The same reference numerals refer to the same composition members, and the detailed explanation is omitted.

In the flow sensor 10 of Embodiment 1 shown in Fig. 1-Fig.10,
the flow sensor unit 24 is inserted from the side of the outlet side piping portion 16 of the flow sensor piping main body 12a in the flow sensor main body accommodating portion 20.

Moreover, the side of the vortex flow generating blade member 30 is abutted to the step portion 22, which is formed on the inner periphery wall of the flow sensor main body accommodating portion 20.
As a result, the flow sensor unit 24 is disposed in the flow sensor main body 20 by fixing the side of the outlet member 34 with a fixing ring 50.

In this case, if the direction, in which the flow sensor unit 24 is inserted in the flow sensor main body accommodating portion 20, is mistake and it is inserted by mistake, the direction of the flow sensor unit 24 might become opposite.

That is, the side of the outlet member 34 is located on the side of the entrance side piping portion 14 of the flow sensor piping main body 12a.
Moreover, the side of the vortex flow generating blade member 30 might be located on the side of the outlet side piping portion 16 of the flow sensor piping main body 12a.

In this case, even if the fluid is introduced from the entrance side piping portion 14 of the upstream side of the flow sensor piping main body 12a in the flow sensor unit 24, the vortex flow is not generated, and the flow measurement rotating blade member 32 is not rotated.
Therefore, it is impossible to measure the flow rate by the flow sensor 10.

Therefore, in the flow sensor 10 of this Embodiment, as shown in Fig. 14(A)-Fig. 14(B), a protruded engaging portion 34b, which is protruded in the direction of the outer periphery, is formed on the outlet member 34.

In addition, the protruding distance in the direction of the outside diameter of this protruded engaging portion 34b is formed, such that it is protruded from the position of the direction of the outside diameter of the step portion 22, which is formed on the inner periphery wall of this flow sensor main body accommodating portion 20.

Moreover, on the inner periphery wall of the flow sensor main body accommodating portion 20, at the side of the outlet side piping portion 16, a step portion 22a, to which the protruded engaging portion 34b of this outlet member 34 is abutted, is formed.

As a result, the direction, in which the flow sensor unit 24 is inserted in the flow sensor main body accommodating portion 20, is not mistake and it is not inserted by mistake.

That is, from either direction from the side of the entrance side piping portion 14 or the side of the outlet side piping portion 16, the flow sensor unit 24 is inserted from the side of the outlet member 34 in the flow sensor main body accommodating portion 20.
In this case, the protruded engaging portion 34b which is protruded in the direction of the outer periphery of the outlet member 34 becomes obstructive, and the flow sensor unit 24 can not be inserted.

In addition, as shown in Fig. 15, in the flow sensor 10 of Fig. 14, such as the conventional flow sensor 100 shown in Fig. 18-Fig. 19, it is also possible that the flow rate detection portion 54 is in the state to be fixed in the recess 52 of the flow sensor main body 12.

### (Embodiment 3)

Fig. 16 is a drawing in which another Embodiment of the flow sensor 10 of the invention is shown, and
Fig. 16(A) is a top view of the flow sensor unit 24 of the flow sensor 10 of the invention, and
Fig. 16(B) is a longitudinal sectional view of the flow sensor 10 of the invention.

The flow sensor 10 of this Embodiment is basically similar composition of the Embodiment 1 shown in Fig. 1-Fig. 10. The same reference numerals refer to the same composition members, and the detailed explanation is omitted.

In the flow sensor 10 of this Embodiment, as shown in Fig. 16(A)-Fig. 16(B), a protruded engaging portion 28a, in which the side of the entrance 36 of the upstream side of the casing 28 is protruded in the direction of the outer periphery, is formed.

Moreover, on the inner periphery wall of the entrance side piping portion 14 of the flow sensor main body accommodating portion 20, a step portion 22a, which is disposed in the opposite direction of the step portion 22, is formed.
In addition, the protruded engaging portion 28a of the upstream side of the casing 28 is abutted to this step portion 22a.

In addition, on the inner periphery wall of the side of the outlet side piping portion 16 of the flow sensor main body accommodating portion 20, a step portion 22b is formed. Moreover, the outlet member 34 of the flow sensor unit 24 is abutted to this step portion 22b.

In addition, the protruding distance in the direction of the outside diameter of the protruded engaging portion 28a of this casing 28 is configured that it is protruded from the position of the direction of the outside diameter of the step portion 22b, which is formed on the inner periphery wall of the side of the outlet side piping portion 16 of the flow sensor main body accommodating portion 20.

As a result, the direction, in which the flow sensor unit 24 is inserted in the flow sensor main body accommodating portion 20, is not mistake and it is not inserted by mistake.

That is, from either direction from the side of the entrance side piping portion 14 or the side of the outlet side piping portion 16, the flow sensor unit 24 is inserted from the side of the entrance 36 of the upstream side of the casing 28 in the flow sensor main body accommodating portion 20.
In this case, the protruded engaging portion 28a which is protruded in the direction of the outer periphery of the upstream side of casing 28 becomes obstructive, and the flow sensor unit 24 can not be inserted.

In addition, as shown in Fig. 17, in the flow sensor 10 of Fig. 16, such as the conventional flow sensor 100 shown in Fig. 18-Fig. 19, it is also possible that the flow rate detection portion 54 is in the state to be fixed in the recess 52 of the flow sensor main body 12.

Although preferable embodiment of the invention is described above, the invention is not limited to this embodiment.

Moreover, in the Embodiment, the flow sensor unit 24 is used.

However, without using the flow sensor unit 24, it is also possible that the vortex flow generating blade member 30, the flow measurement rotating blade member 32, and the outlet member 34 may be directly formed on the flow sensor piping main body 12a.

Moreover, as for the flow sensor unit 24, it comprises the flow sensor unit 24 including the vortex flow generating blade member 30, the flow measurement rotating blade member 32, and the outlet member 34.
However, as for the flow sensor unit 24, for instance, without providing the vortex flow generating blade member 30, it is possible that the flow measurement rotating blade member 32 itself has a shape in which the vortex flow is generated.
Moreover, it is also possible that it may be applied to the flow sensor unit 24 of other compositions.
Therefore, various changes are possible in the scope in which it does not deviate from the object of the invention.

### [Industrial Applicability]

The invention is applicable to a flow sensor to measure the flowing quantity of the fluid which is flowed in piping. For instance, the invention is applicable to the flow sensor to measure the flowing quantity of the fluid of the liquid such as an instantaneous hot-water heater, a boiler, facilities of supplying hot water, and electric water heaters.

### [Explanation of Letters or Numerals]

- 10: Flow sensor
- 12: Flow sensor main body
- 12a: Flow sensor piping main body
- 14: Entrance side piping portion
- 16: Outlet side piping portion
- 18: Sensor accommodating portion
- 20: Flow sensor main body accommodating portion
- 22: Step portion
- 22a: Step portion
- 22b: Step portion
- 24: Flow sensor unit
- 28: Casing
- 28a: Protruded engaging portion
- 30: Vortex flow generating blade member
- 32: Flow measurement rotating blade member
- 34: Outlet member
- 34a: Outlet
- 34b: Protruded engaging portion
- 36: Entrance
- 38: Blade member
- 40: Vortex flow generating introducing path
- 44: Shaft portion
- 44a: Edge
- 44b: Edge
- 48: Blade portion
- 50: Securing ring
- 52: Recess
- 54: Flow rate detection portion
- 56: Substrate
- 58: Hall IC
- 60: Terminal
- 61: Engagement recess
- 62: Engaging portion
- 63: Taper surface
- 64: Flange portion
- 66: Bending portion
- 68: Extended engaging portion
- 70: Engaging protrusion
- 71: Engagement protrusion
- 70a: Engaging recess
- 70b: Convexoconcave
- 72: Engaging space portion
- 73: Taper surface
- 74: Accommodating casing
- 74a: Accommodating casing main body
- 76: Sealing resin
- 78: Engaging flange
- 78a: Inclination guide face
- 78b: Thin portion
- 78c: Thin portion
- 80: Engaging recess
- 80a: Engaging protrusion
- 80b: Convexoconcave
- 84a: Engaging protrusion
- 84b: Engaging recess
- 86a: Engaging recess
- 86b: Engaging protrusion
- 100: Flow sensor
- 102: Flow sensor main body
- 102a: Recess
- 102b: Step portion
- 104: Entrance
- 106: Vortex flow generating blade member
- 108: Blade member
- 110: Vortex flow generating introducing path
- 112: Flow measurement rotating blade member
- 116: Shaft portion
- 116a: Edge
- 116b: Edge
- 118: Outlet member
- 118a: Outlet
- 122: Flow rate detection portion
- 124: Casing
- 126: Flow sensor unit
- 128: Securing ring
- 130: Substrate
- 132: Hall IC
- 134: Terminal
- 136: Sealing resin
- 138: Lead wire
- 140: Blade portion
- 142: Housing
- 200: Flow sensor
- 202: Flow sensor main body
- 204: Flow rate detection portion
- 206: Through hole
- 208: Female screw
- 210: Sealing groove
- 212: Sealing member
- 214: Sensing element
- 216: Sensor casing
- 218: Male screw
- 300: Flow sensor
- 302: Flow sensor main body
- 302a: Recess
- 304: Flow rate detection portion
- 306: Leg
- 308: Slit
- 310: Groove
- 312: Stopper member

## Claims

1. A flow sensor to measure the flowing quantity of the fluid comprising:
a flow sensor main body in which the fluid is flowed and which is provided with a flow measurement rotating blade member that is rotated by fluid flow, and
a flow rate detection portion in which flow measurement is performed by rotating of the flow measurement rotating blade member,
wherein on a peripheral side of the flow sensor main body, a flexible engaging portion and an engaging space portion formed by the engaging portion are formed,
and wherein in the engaging space portion of the flow sensor main body, the flow rate detection portion is provided to elastically deform the flexible engaging portion, or the flexible flow rate detection portion, or both of the flexible engaging portion and the flexible flow rate detection portion,
and whereby by the restoring force of the flexible engaging portion, or the flexible flow rate detection portion, or both of the flexible engaging portion and the flexible flow rate detection portion,
the flow rate detection portion is detachably engaged with the peripheral side of the flow sensor main body.

2. The flow sensor described in Claims 1 wherein,
an engaging between the flexible engaging portion and the flow rate detection portion includes
an engaging between a protrusion or a recess formed on the flexible engaging portion and a recess or a protrusion formed on the flow rate detection portion.

3. The flow sensor described in Claims 1 wherein,
the engaging between flexible engaging portion and the flow rate detection portion includes
an engaging between a minute convexoconcave formed on the flexible engaging portion and a minute convexoconcave formed on the flow rate detection portion.

4. The flow sensor described in any one of Claims 1 to claim 3 wherein,
the engaging between the peripheral side and the flow rate detection portion of the flow sensor main body includes an engaging between;
a protrusion or a recess that is formed on the peripheral side of the flow sensor main body, which is extended in the direction that the flow rate detection portion is provided in the engaging space portion of the flow sensor main body, and
a recess or a protrusion that is provided on the flow rate detection portion, which is extended in the direction that the flow rate detection portion is provided in the engaging space portion of the flow sensor main body.

5. The flow sensor described in any one of Claims 1 to claim 4 wherein,
the flow sensor main body comprising:
a flow sensor piping main body, and
a flow sensor unit which is located in the direction of the fluid flow in the flow sensor piping main body,
the flow sensor unit comprising:
a vortex flow generating blade member which is located on the upstream side entrance of the fluid of the flow sensor unit, and which is fixed and in which vortex flow is generated,
a flow measurement rotating blade member, which is located on the downstream of the vortex flow generating blade member,
and which is rotated by vortex flow generated by the vortex flow generating blade member, and
a bearing in which a shaft portion of the flow measurement rotating blade member is pivoted.
